(19)

**Europäisches Patentamt**
**European Patent Office**
**Office européen des brevets**

(11)  **EP 4 283 993 A1**

(12)  **EUROPEAN PATENT APPLICATION**
published in accordance with Art. 153(4) EPC

(43) Date of publication:
**29.11.2023  Bulletin 2023/48**

(21) Application number: **21920366.8**

(22) Date of filing: **25.01.2021**

(51) International Patent Classification (IPC):
**H04N 19/42** $^{(2014.01)}$

(52) Cooperative Patent Classification (CPC):
**H04N 19/42**

(86) International application number:
**PCT/CN2021/073669**

(87) International publication number:
**WO 2022/155974 (28.07.2022 Gazette 2022/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
- **MA, Zhan**
  **Dongguan, Guangdong 523860 (CN)**
- **XIA, Qi**
  **Dongguan, Guangdong 523860 (CN)**
- **LIU, Haojie**
  **Dongguan, Guangdong 523860 (CN)**

(74) Representative: **Mewburn Ellis LLP**
**Aurora Building**
**Counterslip**
**Bristol BS1 6BX (GB)**

(54)  **VIDEO CODING AND DECODING AND MODEL TRAINING METHOD AND APPARATUS**

(57)  The disclosure provides a video coding method and apparatus, and a model training method and apparatus. A feature map of a target object and a feature map of a background in a picture are separated, each of which is encoded into a bitstream with a different bitrate. Intelligent analysis is directly performed on the feature map of the target object to eliminate the decoding process, efficiently achieving the task oriented to human-machine hybrid vision, improving coding efficiency and reducing decoding complexity.

700

| | |
|---|---|
| OBTAIN A FIRST TRAINING PICTURE | S701 |
| PROCESS THE FIRST TRAINING PICTURE TO OBTAIN A BINARY MASK OF A TARGET OBJECT IN THE FIRST TRAINING PICTURE AND A BINARY MASK OF A BACKGROUND IN THE FIRST TRAINING PICTURE | S702 |
| ENCODE THE FIRST TRAINING PICTURE WITH A FIRST ENCODER TO OBTAIN A FIRST FEATURE MAP OF THE FIRST TRAINING PICTURE, AND ENCODER THE FIRST TRAINING PICTURE WITH A SECOND ENCODER TO OBTAIN A SECOND FEATURE MAP OF THE FIRST TRAINING PICTURE | S703 |
| OBTAIN A FEATURE MAP OF THE TARGET OBJECT IN THE FIRST TRAINING PICTURE ACCORDING TO THE BINARY MASK OF THE TARGET OBJECT IN THE FIRST TRAINING PICTURE AND THE FIRST FEATURE MAP OF THE FIRST TRAINING PICTURE, AND OBTAIN A FEATURE MAP OF THE BACKGROUND IN THE FIRST TRAINING PICTURE ACCORDING TO THE BINARY MASK OF THE BACKGROUND IN THE FIRST TRAINING PICTURE AND THE SECOND FEATURE MAP OF THE FIRST TRAINING PICTURE | S704 |
| ENCODER THE FEATURE MAP OF THE TARGET OBJECT IN THE FIRST TRAINING PICTURE AND THE FEATURE MAP OF THE BACKGROUND IN THE FIRST TRAINING PICTURE TO OBTAIN A BITSTREAM | S705 |
| DECODE THE BITSTREAM TO OBTAIN THE FEATURE MAP OF THE TARGET OBJECT IN THE FIRST TRAINING PICTURE AND THE FEATURE MAP OF THE BACKGROUND IN THE FIRST TRAINING PICTURE | S706 |
| OBTAIN A THIRD FEATURE MAP OF THE FIRST TRAINING PICTURE ACCORDING TO THE FEATURE MAP OF THE TARGET OBJECT IN THE FIRST TRAINING PICTURE AND THE FEATURE MAP OF THE BACKGROUND IN THE FIRST TRAINING PICTURE | S707 |
| DECODE THE THIRD FEATURE MAP OF THE FIRST TRAINING PICTURE USING A DECODER TO OBTAIN A RECONSTRUCTED PICTURE OF THE FIRST TRAINING PICTURE | S708 |
| TRAIN THE FIRST ENCODER, THE SECOND ENCODER, AND THE DECODER ACCORDING TO THE FIRST TRAINING PICTURE AND THE RECONSTRUCTED PICTURE OF THE FIRST TRAINING PICTURE | S709 |

FIG. 7

EP 4 283 993 A1

**Description**

TECHNICAL FIELD

The present disclosure relates to the field of video coding technologies, and in particular to a video coding method and apparatus and a model training method and apparatus.

BACKGROUND

Digital video technology may be incorporated into a variety of video devices, such as digital televisions, smart phones, computers, electronic readers, video players, etc. With the development of video technology, the amount of video data is large. In order to facilitate transmission of the video data, the video apparatus executes video compression to enable more efficient transmission or storage of the video data.

With the rapid development of visual analysis technologies, a machine vision-oriented video coding framework is proposed that combines a neural network technology and a picture video compression technology.

However, the current machine vision-oriented video coding framework has low coding efficiency and high decoding complexity.

SUMMARY

Implementations of the present disclosure provide a video coding method and apparatus and a model training method and apparatus, in order to improve the coding efficiency and reduce the decoding complexity.

In a first aspect, a video encoding method is provided in the disclosure. The method includes the following. A current picture is obtained. A binary mask of a target object in the current picture is processed by processing the current picture. A first feature map of the current picture is obtained by encoding the current picture with a first encoder. A feature map of the target object in the current picture is obtained according to the binary mask of the target object in the current picture and the first feature map of the current picture. The feature map of the target object in the current picture is encoded to obtain a bitstream.

In a second aspect, a video decoding method is provided in the disclosure. The method includes the following. A bitstream is decoded to obtain a feature map of a target object in a current picture. The feature map of the target object in the current picture is input to a visual task network and a prediction result output by the visual task network is obtained.

In a third aspect, a model training method is provided in the disclosure. The method includes the following. A first training picture is obtained. A binary mask of a target object in the first training picture and a binary mask of a background in the first training picture are obtained by processing the first training picture. A first feature map of the first training picture is obtained by encoding the first training picture with a first encoder, and a second feature map of the first training picture is obtained by encoding the first training picture with a second encoder. A feature map of the target object in the first training picture is obtained according to the binary mask of the target object in the first training picture and the first feature map of the first training picture, and a feature map of the background in the first training picture is obtained according to the binary mask of the background in the first training picture and the second feature map of the first training picture. The feature map of the target object in the first training picture and the feature map of the background in the first training picture are encoded to obtain a bitstream. The bitstream is decoded to obtain the feature map of the target object in the first training picture and the feature map of the background in the first training picture. A third feature map of the first training picture is obtained according to the feature map of the target object in the first training picture and the feature map of the background in the first training picture. The third feature map of the first training picture is decoded with a decoder to obtain a reconstructed picture of the first training picture. The first encoder, the second encoder, and the decoder are trained according to the first training picture and the reconstructed picture of the first training picture.

In a fourth aspect, a video encoder is provided in the disclosure. The encoder is configure to execute the method of the first aspect or implementations thereof. Specifically, the encoder includes functional units configured to perform the method of the first aspect or implementations thereof.

In a fifth aspect, a video decoder is provided in the disclosure. The decoder is configure to execute the method of the second aspect or implementations thereof. Specifically, the decoder includes functional units configured to perform the method of the second aspect or implementations thereof.

In a sixth aspect, a video encoder is provided in the disclosure. The encoder includes a processor and a memory. The memory is configured to store a computer program, and the processor is configured to execute and run the computer program stored in the memory to perform the method of the first aspect or implementations thereof.

In a seventh aspect, a video decoder is provided in the disclosure. The decoder includes a processor and a memory. The memory is configured to store a computer program, and the processor is configured to execute and run the computer program stored in the memory to perform the method of the second aspect or implementations thereof.

In an eighth aspect, a model training apparatus is provided in the disclosure. The model training apparatus is configured to execute the method of the third aspect or implementations thereof. Specifically, the model training apparatus includes functional units configured to perform the method of the third aspect or implementations thereof.

In a ninth aspect, a model training apparatus is provided in the disclosure. The model training apparatus includes a processor and a memory. The memory is configured to store a computer program, and the processor is configured to execute and run the computer program stored in the memory to perform the method of the third aspect or implementations thereof.

In a tenth aspect, a video coding system is provided in the disclosure. The video coding system includes a video encoder and a video decoder. The video encoder is configured to perform the method of the first or third aspect or implementations thereof. The video decoder is configured to perform the method of the second or third aspect or implementations thereof.

In an eleventh aspect, a chip is provided, which is configured to perform the method of any of the first and second aspects and implementations thereof. Specifically, the chip includes a processor configured to invoke a computer program from a memory and run the computer program to cause a device equipped with the chip to perform the method of any of the first to third aspects or implementations thereof.

In a twelfth aspect, a computer-readable storage medium is provided, which is configured to store a computer program. The computer program causes a computer to perform the method of any of the first to third aspects or implementations thereof.

In a thirteenth aspect, a computer program product is provided. The computer program product includes computer program instructions that cause a computer to perform the method of any of the first to third aspects or implementations thereof.

In a fourteenth aspect, a computer program is provided. When running in a computer, the computer program causes the computer to perform the method of any of the first to third aspects or implementations thereof.

Based on the above technical solutions, the feature map of the target object region and the feature map of the background region in the picture are separated and each encoded into a bitstream with a different bitrate. Intelligent analysis is directly performed on the feature map of the target object to eliminate the decoding process, efficiently achieving the task oriented to human-machine hybrid vision, improving coding efficiency and reducing decoding complexity.

BRIEF DESCRIPTION OF THE DRAWINGS

FIG. 1 is a schematic block diagram of a video coding system 100 according to implementations of the present disclosure.

FIG. 2 is a schematic block diagram of a video encoder 200 according to implementations of the present disclosure.

FIG. 3 is a schematic block diagram of a video decoder 300 according to implementations of the present disclosure.

FIG. 4 is a schematic structural diagram of a video compression model 400 according to implementations of the present disclosure.

FIG. 5A is a schematic structural diagram of a neural network corresponding to an encoder according to implementations of the present disclosure.

FIG. 5B is a schematic structural diagram of a neural network corresponding to an encoder according to implementations of the present disclosure.

FIG. 6A is a schematic structural diagram of a neural network corresponding to a decoder according to implementations of the present disclosure.

FIG. 6B is a schematic structural diagram of a neural network corresponding to a decoder according to implementations of the present disclosure.

FIG. 7 is a schematic flowchart of a compression model training method 700 according to implementations of the present disclosure.

FIG. 8 is a schematic diagram of an intelligent coding framework according to implementations of the present disclosure.

FIG 9 is a schematic flowchart of a training method 900 of a visual task network according to implementations of the present disclosure.

FIG. 10 is a schematic flowchart of a video encoding method 1000 according to implementations of the present disclosure.

FIG. 11 is a schematic flowchart of a video encoding method 2000 according to implementations of the present disclosure.

FIG. 12 is a schematic flowchart of a video decoding method 3000 according to implementations of the present disclosure.

FIG. 13 is a schematic flowchart of a video decoding method 4000 according to implementations of the present disclosure.

FIG. 14 is a schematic block diagram of a video encoder 10 according to implementations of the present disclosure.

FIG. 15 is a schematic block diagram of a video decoder 20 according to implementations of the present disclosure.

FIG. 16 is a schematic block diagram of a model training apparatus 50 according to implementations of the present disclosure.

FIG. 17 is a schematic block diagram of an electronic device 30 according to implementations of the present disclosure.

FIG 18 is a schematic block diagram of a video coding system 40 according to implementations of the present disclosure.

## DETAILED DESCRIPTION

The present disclosure is applicable to various video coding fields oriented to machine vision and human-machine hybrid vision, which combine technologies such as fifth generation (5G), artificial intelligence (AI), depth learning, feature extraction and video analysis with existing video processing and coding technologies. In the 5G era, numerous machine-oriented applications emerge. Compared with the gradually saturated human-oriented videos, Machine vision contents such as Internet of vehicles, unmanned driving, industrial Internet, smart and safe cities, wearable and video surveillance have wider application scenarios. The machine vision-oriented video coding becomes one of major sources of incremental traffic in the 5G and post-5G era.

For example, the solution of the present disclosure may be combined with an audio video coding standard (AVS), such as the H.264/audio video coding (AVC) standard, the H.265/high efficiency video coding (HEVC) standard, and the H.266/versatile video coding (VVC) standard. Alternatively, the solution of the present disclosure may operate in conjunction with other proprietary or industry standards, including ITU-T H.261, ISO/IEC MPEG-1 Visual, ITU-T H.262 or ISO/IEC MPEG-2 Visual, ITU-T H.263, ISO/IEC MPEG-4 Visual, ITU-T H.264 (also known as ISO/IEC MPEG-4 AVC), including scalable video coding (SVC) and multi-view video coding (MVC) extensions. It should be understood that the techniques of this disclosure are not limited to any particular codec standard or technique.

Picture and video coding is one of the key research issues in multimedia signal processing, and belongs to the field of source coding, theoretical basis of which is information theory and coding theory established in the 1940s and 1950s. The essence of picture and video coding lies in eliminating various redundant information (such as in space domain, time domain, vision, and statistics) existing in a picture and video signal through algorithms, so as to achieve signal compression. In early coding research, the research mainly focus on lossless compression of a source signal, for example, coding methods such as Huffman coding, Columbus coding, and arithmetic coding, which are also collectively called entropy coding. In the 1970s, picture compression technologies developed rapidly, and transform coding technologies for transforming a space domain signal into a frequency domain signal are proposed. That is, spatial domain redundancy is removed by aggregating energy to a low-frequency area through linear transformation, and then the low-frequency coefficients are encoded using coefficient scanning and entropy encoding, In this way, the compression of pixels is converted into the compression on the low-frequency coefficients. According to different transform basis functions, classical transform coding techniques are divided into Fourier transform, Hadamard transform, discrete cosine transform and the like. Hereafter, with the continuous development of the capturing and display device, the demand for efficient compression of picture and video contents is increasing. In order to effectively eliminate time-domain redundancy between adjacent pictures in a video signal, block-based motion estimation and motion compensation predictive coding are proposed, thereby achieving a compression effect of 1 bit per pixel on average. At the end of the 1970s, a hybrid coding framework combining prediction and transformation is proposed. In the subsequent 40 years, hybrid coding framework technologies are continuously changed, and more elaborate coding tools are supported, such as modules of high-precision sub-pixel interpolation, multi-hypothesis inter prediction, and loop filtering. The hybrid coding framework has achieved great success in the field of picture and video coding, and a series of coding standards are produced, such as JPEG, JPEG 2000, MPEG 1/2/4, H. 120/261/2/3, H.264/AVC, HEVC/H.265, AVS-1/+/2, etc., which has driven the evolution of the digital media industry and the development of ultra-high definition digital television, IPTV, immersive multimedia services, Internet video, and other applications.

The neural network is derived from a cross study of cognitive neuroscience and mathematics, and with the multi-layer perceptron (MLP) structure constructed by multiple layers of alternate cascaded neurons and nonlinear activation functions, the neural network can achieve approximation of any continuous function with a sufficiently small error. The neural network learning method has experienced a perceptron learning algorithm proposed in the 1960s, and an MLP learning process established in the 1980s by the chain rule and the back-propagation algorithm, and further to a random gradient descent method widely used today. In order to solve the problems of high complexity in calculation of a time-domain signal gradient and signal dependency, a long short-term memory (LSTM) structure is proposed, which achieves efficient learning of a sequence signal by controlling gradient transfer through a cyclic network structure. By layered pre-training of each layer of a restricted Boltzmann machine (RBM), deep neural network training is made possible. While explaining that the MLP structure has more excellent feature learning capabilities, the training complexity of MLP may also be effectively mitigated by layer-by-layer initialization and pre-training. Henceforth, the MLP structure with multiple hidden layers becomes a hot study issue again, and neural networks also have a new name, that is, deep learning (DL).

The Neural network, as an optimized algorithm and a form of compact characterization of signals, may be combined with picture and video compression.

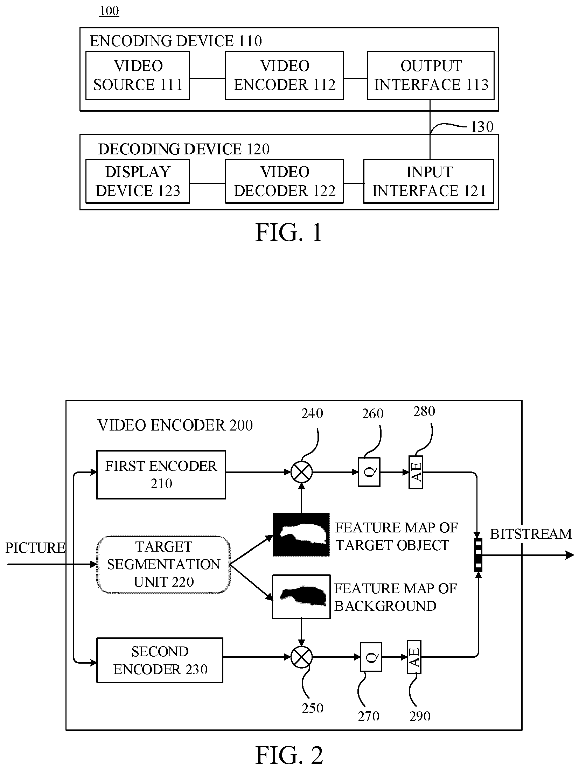

Firstly, a video coding system according to implementations of the present disclosure will be described with reference to FIG. 1.

FIG. 1 is a schematic block diagram of a video coding system 100 involved in implementations of the present disclosure. It should be noted that FIG. 1 is only an example, and the video coding system in the implementation of the present disclosure includes, but is not limited to, that illustrated in FIG. 1. As illustrated in FIG. 1, the video coding system 100 includes an encoding device 110 and a decoding device 120. The encoding device is configured to encode (which may be understood as compress) video data to generate a bitstream, and transmit the bitstream to the decoding device. The decoding device decodes the bitstream generated by the encoding device, and obtains decoded video data.

The encoding device 110 in the implementation of the present disclosure may be understood as a device having a video encoding function, and the decoding device 120 may be understood as a device having a video decoding function. That is, in the implementation of the present disclosure, the encoding device 110 and the decoding device 120 each include a wider range of devices, for example, including a smartphone, a desktop computer, a mobile computing device, a notebook (for example, a laptop computer), a tablet computer, a set-top box, a television, a camera, a display devices, a digital media player, a video game console, an in-car computer, and the like.

In some implementations, the encoding device 110 may transmit encoded video data (e. g., a bitstream) to the decoding device 120 via a channel 130. The channel 130 may include one or more media and/or devices capable of transmitting encoded video data from the encoding device 110 to the decoding device 120.

In one example, the channel 130 includes one or more communication media that enable the encoding device 110 to transmit encoded video data directly to the decoding device 120 in real-time. In this example, the encoding device 110 may modulate the encoded video data according to a communication standard and transmit the modulated video data to the decoding device 120. The communication medium includes a wireless communication medium, for example, a radio frequency spectrum. Optionally, the communication medium may also include a wired communication medium, for example, one or more physical transmission lines.

In another example, the channel 130 includes a storage medium that can store video data encoded by encoding device 110. The storage media include a variety of local-access data storage media, such as optical discs, DVDs, flash memory, and the like. In this example, the decoding device 120 may acquire encoded video data from the storage medium.

In another example, the channel 130 may include a storage server that may store video data encoded by the encoding device 110. In this example, the decoding device 120 may download the stored coded video data from the storage server. Alternatively, the storage server may store the encoded video data and may transmit the encoded video data to the decoding device 120, such as a web server (e. g., for a website), a file transfer protocol (FTP) server, or the like.

In some implementations, the encoding device 110 includes a video encoder 112 and an output interface 113. The output interface 113 may include a modulator/demodulator (modem) and/or a transmitter.

In some implementations, the encoding device 110 may include a video source 111 in addition to the video encoder 112 and the input interface 113.

The video source 111 may include at least one of a video capturing device (e. g., a video camera), a video archive, a video input interface for receiving video data from a video content provider, and a computer graphics system for generating video data.

The video encoder 112 encodes video data from the video source 111 to generate a bitstream, where the video data may include one or more pictures or sequences of pictures. The bitstream contains encoding information of the pictures or sequences of pictures. The encoding information may include encoded picture data and associated data. The associated data may include sequence parameter sets (SPS), picture parameter sets (PPS), and other syntax structures. The SPS may contain parameters for one or more sequences. The PPS may contain parameters for one or more pictures. The syntax structure refers to a set of zero or more syntax elements arranged in a specified order in the bitstream.

The video encoder 112 directly transmits the encoded video data to the decoding apparatus 120 via the output interface 113. The encoded video data may also be stored in a storage medium or a storage server for subsequently read by the decoding device 120.

In some implementations, the decoding device 120 includes an input interface 121 and a video decoder 122.

In some implementations, the decoding device 120 may include a display device 123 in addition to the input interface 121 and the video decoder 122.

The input interface 121 includes a receiver and/or a modem. The input interface 121 may receive encoded video data via the channel 130.

The video decoder 122 is configured to decode the encoded video data to obtain decoded video data, and transmit the decoded video data to the display device 123.

The display device 123 displays the decoded video data. The display device 123 may be integrated with or external to the decoding apparatus 120. The display device 123 may include a variety of display devices, such as a liquid crystal display (LCD), a plasma display, an organic light emitting diode (OLED) display, or other type of display device.

In addition, FIG. 1 is only an example, and the technical solution of the implementation of the present disclosure is not limited to FIG. 1. For example, the technology of the present disclosure may also be applied to single-side video encoding or single-side video decoding.

The following introduces a video coding framework provided in the implementations of the present disclosure.

FIG. 2 is a schematic block diagram of a video encoder 200 according to implementations of the present disclosure. It should be understood that the video encoder 200 may be configured to perform lossy compression or lossless compression on a picture. The lossless compression may be visual lossless compression, and may also be mathematical lossless compression.

The video encoder 200 may be applied to picture data in a luminance-chrominance (YCbCr, YUV) format. For example, a YUV ratio may be 4:2:0, 4:2:2, or 4:4:4, where Y represents a luminance (luma), Cb (U) represents a blue chrominance (chroma), Cr (V) represents a red chroma, and U and V represent chroma for describing a color and saturation. For example, in a color format, 4:2:0 represents each pixel has 4 luma components and 2 chroma components (YYYCbCr), 4:2:2 represents each pixel has 4 luma components and 4 chroma components (YYYCbCrCbCr), and 4:4:4 represents full pixel display (YYYYCbCrCbCbCrCbCbCbCr).

In some implementations, as illustrated in FIG. 2, the video encoder 200 may include a first encoder 210, a target segmentation unit 220, a second encoder 230, a first multiplication unit 240, a second multiplication unit 250, a first quantization unit 260, a second quantization unit 270, a first encoding unit 280, and a second encoding unit 290. It should be noted that the video encoder 200 may include more, less, or different functional components. In FIG. 2, Q represents quantization and AE represents arithmetic encoding.

Optionally, in the present disclosure, the current picture may be referred to as a current picture to-be-encoded, a target picture, or the like.

In some implementations, the first encoder 210, the second encoder 230, and the target segmentation unit 220 in the present disclosure are each a neural network, for example, a convolutional neural network (CNN), a recurrent neural network (RNN), and a generative antagonistic networks (GAN).

In some implementations, the first encoder 210 and the second encoder 230 each provide a different encoding bitrate. For example, the encoding bitrate provided by the first encoder 210 is greater than the encoding bitrate provided by the second encoder 230, or the encoding bitrate provided by the first encoder 210 is less than the encoding bitrate provided by the second bitrate 230. The first encoder 210 and the second encoder 230 are each configured to generate a feature map of the current picture.

In some implementations, the first encoder 210 and the second encoder 230 provide the same encoding bitrate.

In some implementations, the neural networks of the first encoder 210 and the second encoder 230 are of the same structure. In each convolution layer, data exists in a three-dimensional format, which may be viewed as a stack of multiple two-dimensional pictures, each of which is referred to as a feature map. In an input layer, for a grayscale picture, there is only one feature map, and for a color picture, there are generally three feature maps, respectively being a feature map corresponding to a red channel, a feature map corresponding to a green channel, and a feature map corresponding to a blue channel. There are several convolution kernels between layers. Convolution is performed between each feature map of a previous layer and a corresponding convolution kernel, so that a feature map of a next layer is generated.

The first encoder 210 may be configured to encode the current picture and output a first feature map of the current picture. In some implementations, since the encoding bitrate provided by the first encoder 210 is greater than the encoding bitrate provided by the second encoder 230, the first feature map output by the first encoder 210 may be referred to as a high-bitrate feature map of the current picture.

The second encoder 230 may be configured to encode the current picture and output a second feature map of the current picture. In some implementations, since the encoding bitrate provided by the second encoder 230 is less than the encoding bitrate provided by the first encoder 210, the second feature map output by the second encoder 230 may be referred to as a low-bitrate feature map of the current picture.

The target segmentation unit 220 may be configured to segment the target object and the background from the current picture.

In some implementations, the target segmentation unit 220 may be a target detection network. The target detection network is a neural network that can detect a target object in the current picture and enclose the target object in the current picture with a target box. All parts of the current picture, except for the target object in the target box, are divided into the background of the current picture.

In some implementations, the target segmentation unit 220 may be a semantic segmentation network that can segment the current picture into the target object and the background. For example, the current picture is input into the semantic segmentation network, and the semantic segmentation network then outputs a binary mask of the target object in the current picture and a binary mask of the background in the current picture. The binary mask of the target object and the binary mask of the background are both two-dimensional matrices. The size of the two-dimensional matrix is consistent with the size (resolution) of the current picture. For example, if the size of the current picture is $64 \times 64$, that is, the current picture includes 64 pixel rows and each row includes 64 pixels, then the size of each of the two-dimensional matrices of the binary mask of the target object and the binary mask of the background is also $64 \times 64$.

It should be noted that the current picture may include at least one target object, for example, a human face, an automobile, an animal, and the like in the current picture.

The first multiplication unit 240 may be configured to generate the feature map of the target object. For example, the first multiplication unit 240 is configured to obtain the first feature map of the current picture output by the first encoding unit 280, obtain the binary mask of the target object output by the target segmentation unit 220, and multiply the first feature map by the binary mask of the target object to obtain the feature map of the target object. The feature map of the target object may be understood as a three-dimensional matrix.

The second multiplication unit 250 may be configured to generate the feature map of the background. For example, the second multiplication unit 250 is configured to obtain the second feature map of the current picture output by the second encoding unit 290, obtain the binary mask of the background output by the target segmentation unit 220, and multiply the second feature map by the binary mask of the background to obtain the feature map of the background. The feature map of the background may be understood as a three-dimensional matrix.

The first quantization unit 260 is configured to quantize the feature map of the target object output by the first multiplication unit 240. Because each value in the feature map of the target object output by the first multiplication unit 240 is a float number, in order to facilitate subsequent encoding, each float number in the feature map of the target object is quantized into an integer value.

The second quantization unit 270 is configured to quantize the feature map of the background output by the second multiplication unit 250. Because each value in the feature map of the background output by the second multiplication unit 250 is a float number, in order to facilitate subsequent encoding, each float number in the feature map of the background is quantized into an integer value.

It should be noted that the quantization steps for the first quantization unit 260 and the second quantization unit 270 may be the same or different, which is not limited in the present disclosure.

The first encoding unit 280 may be configured to encode the quantized feature map of the target object output by the first quantization unit 260.

The second encoding unit 290 may be configured to encode the quantized feature map of the background output by the second quantization unit 270.

In some implementations, the first encoding unit 280 and the second encoding unit 290 may be the same encoding unit.

In some implementations, the first encoding unit 280 and the second encoding unit 290 perform entropy encoding using context adaptive binary arithmetic coding (CABAC).

The basic process of video encoding in the present disclosure is as follows. At the encoder side, for each current picture in a video stream, the first encoder 210 encodes the current picture with a first encoding bitrate so as to obtain the first feature map of the current picture, the second encoder 230 encodes the current picture with a second encoding bitrate so as to obtain the second feature map of the current picture, The first encoding bitrate is higher than the second encoding bitrate. The target segmentation unit 220 segments the current picture into the target object and the background to obtain the binary mask of the target object and the binary mask of the background. The first multiplication unit 240 is configured to obtain the feature map of the target object by multiplying the first feature map of the current picture by the binary mask of the target object. The second multiplication unit 250 is configured to obtain the feature map of the background by multiplying the second feature map of the current picture by the binary mask of the background. The first quantization unit 260 is configured to quantize the feature value of the floating-point type in the feature map of the target object to the integer type, to obtain the quantized feature map of the target object. The second quantization unit 270 is configured to quantize the feature value in the feature map of the background in the floating-point type to the integer type, to obtain the quantized feature map of the background. The first encoding unit 280 is configured to encode the quantized feature map of the target object, and the second encoding unit 290 is configured to encode the quantized feature map of the background, so that a bitstream is obtained.

In some implementations, the video encoder of the present disclosure encodes the target object in the current picture with a higher bitrate, and encodes the background in the current picture with a lower bitrate, thereby highlighting the target object in the current picture without increasing the overall bitrate overhead, and improving the coding efficiency of the target object.

In addition, in the present disclosure, the target object and the background are encoded separately, so that the bitstream includes the feature map of the target object, which facilitates a visual task network to directly use the feature map of the target object in the bitstream to execute a visual task, thereby effectively realizing the machine-oriented visual task.

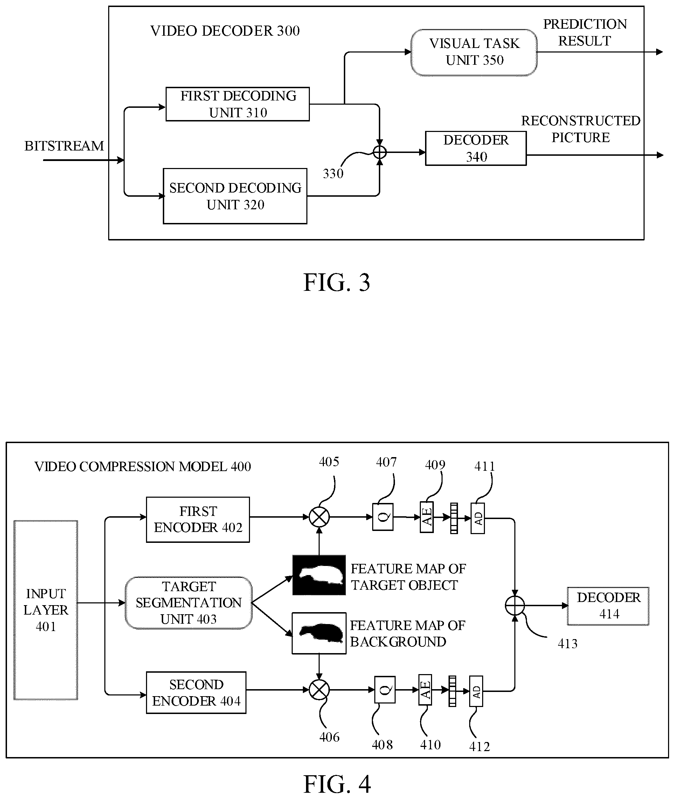

FIG. 3 is a schematic block diagram of a video decoder 300 according to implementations of the present disclosure.

As illustrated in FIG. 3, the video decoder 300 includes a first decoding unit 310, a second decoding unit 320, an adding unit 330, a decoder 340, and a visual task unit 350. It should be noted that the video decoder 300 may include more, fewer, or different functional components.

In some implementations, the first decoding unit 310 and the second decoding unit 320 may be one unit.

The video decoder 300 may receive a bitstream. The first decoding unit 310 and the second decoding unit 320 may parse the bitstream to extract syntax elements from the bitstream.

In some implementations, the first decoding unit 310 may be configured to decode the bitstream to obtain a feature map of a target object of a current picture in the bitstream.

In an example, if the video encoder has quantized the feature map of the target object, the first decoding unit 310 decodes the bitstream to obtain the quantized feature map of the target object in the current picture.

The visual task unit 350 may be configured to obtain the feature map of the target object output by the first decoding unit 310, and use the feature map of the target object as an input to obtain a result of the visual task through prediction.

In some implementations, the visual task unit 350 may be a machine-vision task network, such as a classification network, a target detection network, a target segmentation network, etc.

In some implementations, the second decoding unit 320 may be configured to decode the bitstream to obtain a feature map of a background of the current picture in the bitstream.

In an example, if the video encoder has quantized the feature map of the background, the second decoding unit 320 decodes the bitstream to obtain the quantized feature map of the background in the current picture.

The adding unit 330 may be configured to add the feature map of the target object decoded by the first decoding unit 310 and the feature map of the background decoded by the second decoding unit 320, to obtain a third feature map of the current picture.

The decoder 340 is a neural network, which includes at least one convolution layer. The third feature map of the current picture is input into the decoder, and the decoder outputs a reconstructed picture of the current picture.

It should be noted that, the process performed by the decoder 340 may be understood as an inverse process performed by the encoder.

A basic process of video decoding involved in the present disclosure is as follows. The video decoder 300 receives the bitstream, and the first decoding unit 310 in the video decoder 300 is configured to decode the bitstream to obtain the feature map of the target object in the current picture. The feature map of the target object is used as an input of the visual task unit 350. The visual task unit 350 outputs the prediction result of the visual task. For example, the visual task unit 350 is the picture classification network, and the feature map of the target object is input into the picture classification network and the picture classification network outputs the classification result of the target object.

In addition, the second decoding unit 320 is configured to decode the bitstream to obtain the feature map of the background in the current picture. The adding unit adds the feature map of the target object in the current picture and the feature map of the background to obtain the third feature map of the current picture, and inputs the obtained third feature map of the current picture into the decoder. The decoder decodes the third feature map of the current picture to obtain the reconstructed picture of the current picture. In some implementations, the decoder transmits the reconstructed picture of the current picture to the display device, so that the display device displays the reconstructed picture of the current picture.

At the decoding side of the present disclosure, the feature map of the target object in the bitstream is directly used for visual task processing, thereby improving the processing efficiency of the machine-oriented visual task.

The above is the hybrid human-machine coding framework and basic coding process provided in the present disclosure. With the development of technology, some modules or operations in the framework or process may be optimized. The present disclosure is applicable to the hybrid human-machine coding framework, but is not limited thereto.

The video coding system, the video encoder, and the video decoder involved in the implementations of the present disclosure are introduced in the foregoing. Since the video encoder and the video decoder of the present disclosure are neural-network-based video encoder/decoder respectively, model training needs to be performed on the neural-network-based video encoder/decoder before perform video encoding and decoding using the video encoder and decoder.

In the implementations of the present disclosure, the first encoder, the second encoder, and the decoder are taken as a part of a compression model, and an end-to-end model training is performed on the compression model as a whole. The training process of the video compression model in the implementations of the present disclosure will be described in detail below with reference to FIG. 4.

FIG. 4 is a schematic structural diagram of a video compression model 400 according to implementations of the present disclosure. As illustrated in FIG. 4, The compression model includes an input layer 401, a first encoder 402, a target segmentation unit 403, a second encoder 404, a first multiplication unit 405, a second multiplication unit 406, a first quantization unit 407, a second quantization unit 408, a first encoding unit 409, a second encoding unit 410, a first decoding unit 411, a second decoding unit 412, an adding unit 413, and a decoder 414.

The first encoder 402 and the second encoder 404 are each a neural-network-based encoder. The first encoder 402 and the second encoder 404 are each configured to obtain a feature map of an input picture. The first encoder 402 and the second encoder 404 have a same network structure.

In some implementations, the network structure of each of the first encoder 402 and the second encoder 404 is a convolutional neural network, which includes at least one convolution layer. The convolution layer is configured to perform convolution on the input picture, that is, process the input picture by using a convolution kernel, which can learn a feature with relatively high robustness. Each convolution layer outputs at least one feature map, and a feature map output by a previous convolution layer is used as an input of a next convolution layer. The picture to-be-encoded is input into the first encoder 402 or the second encoder 404 in the network structure, from which the feature map of the encoded picture is output.

In some implementations, the convolutional neural network corresponding to the first encoder 402 or the second encoder 404 further includes at least one residual block for capturing minor fluctuation between the input and the output.

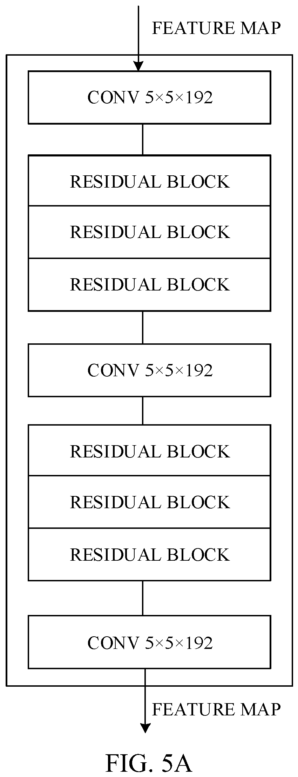

In an example, as illustrated in FIG. 5A, the neural networks of the first encoder 402 and the second encoder 404 each include three convolution layers and six residual blocks, which are a first convolution layer, three continuous residual blocks, a second convolution layer, three continuous residual blocks, and a third convolution layer in sequence along the direction of the network depth.

It should be noted that, a size of the convolution kernel of each of the first convolution layer, the second convolution layer, and the third convolution layer may be set according to actual needs, which is not limited in the present disclosure. For example, as illustrated in FIG. 5A, the convolution kernel of each of the first convolution layer, the second convolution layer, and the third convolution layer has a size of 5 × 5 × 192, where 5 × 5 is the size of the convolution kernel, that is, the length × width of the convolution kernel are 5 × 5, and 192 is the number of channels. The number of channels may be understood as the number of convolution kernels, that is, each convolution layer in FIG. 5A includes 192 convolution kernels.

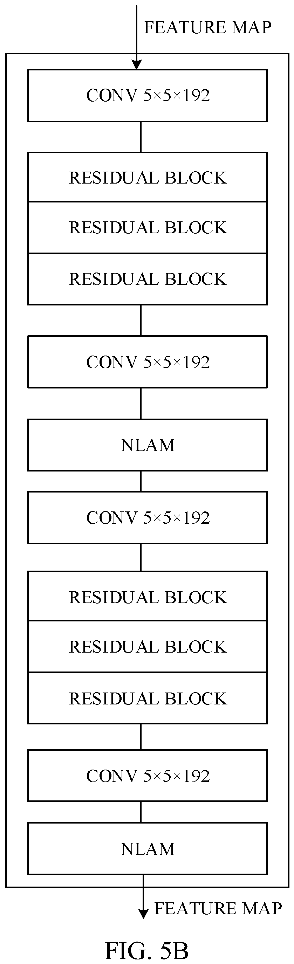

In some implementations, as illustrated in FIG. 5B, the convolutional neural network of each of the first encoder 402 and the second encoder 404 includes four convolutional layers, six residual blocks, and two non-local attention modules (NLAMs), which are a first convolutional layer, three continuous residual blocks, a second convolutional layer, a first NLAM, a third convolutional layer, three continuous residual blocks, a fourth convolutional layer, and a second NLAM in sequence along the direction of the network depth. The first NLAM and the second NLAM may assign different weights to features at different positions of the picture.

The network structure of each of the first NLAM and the second NLAM includes a main branch and a branch, where the main branch includes a non-local network (NLN), three residual blocks (ResBlock), a convolution layer, an activation function (Sigmoid) and an attention mask. The branch includes 3 residual blocks (ResBlock).

In some implementations, the ResBlock includes two convolution layers (Conv) and an activation function (RuLU), where the activation function is located between the two convolution layers and is configured to use a feature map output by a previous convolution layer as an input of a next convolution layer.

It should be noted that, a size of each convolution kernel of the first convolution layer, the second convolution layer, the third convolution layer, and the fourth convolution layer illustrated in FIG. 5B may be set according to actual needs, which is not limited in the present disclosure. For example, as illustrated in FIG. 5B, each convolution kernel of the first convolution layer, the second convolution layer, the third convolution layer, and the fourth convolution layer has a size of 5 × 5 × 192, where 5 × 5 is the size of the convolution kernel, that is, the length × width of the convolution kernels are 5 × 5, and 192 is the number of channels. The number of channels may be understood as the number of convolution kernels, that is, in FIG. 5B, each convolution layer includes 192 convolution kernels.

The decoder 414 in the present disclosure may be understood as performing an inverse process of the first encoder 402 and the second encoder 404.

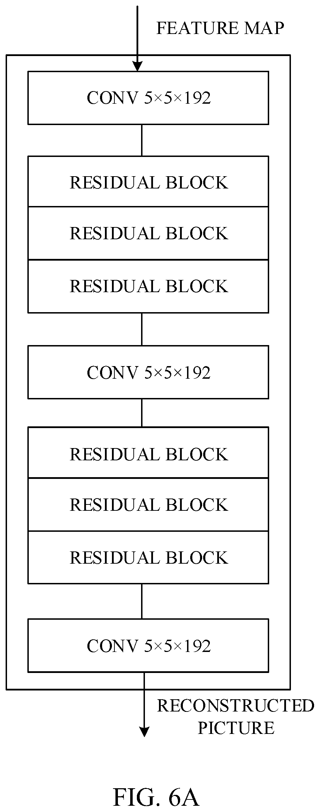

In some implementations, if the network structure of each of the first encoder 402 and the second encoder 404 is as illustrated in FIG. 5A, the network structure of the decoder is as illustrated in FIG. 6A, including three convolution layers and six residual blocks, which are a first convolution layer, three continuous residual blocks, a second convolution layer, three continuous residual blocks, and a third convolution layer in sequence along the direction of the network depth. The convolution kernel of each convolution layer has the same size as the convolution kernel of the corresponding convolution layer in the first encoder 402 and the second encoder 404. For example, as illustrated in FIG. 6A, a convolution kernel of each the first, second, and third convolution layers has a size of $5 \times 5 \times 192$, where $5 \times 5$ is the size of the convolution kernel, that is, the length $\times$ width of the convolution kernel is $5 \times 5$, and 192 is the number of channels. The number of channels may be understood as the number of convolution kernels. That is, each convolution layer in FIG. 6A includes 192 convolution kernels.

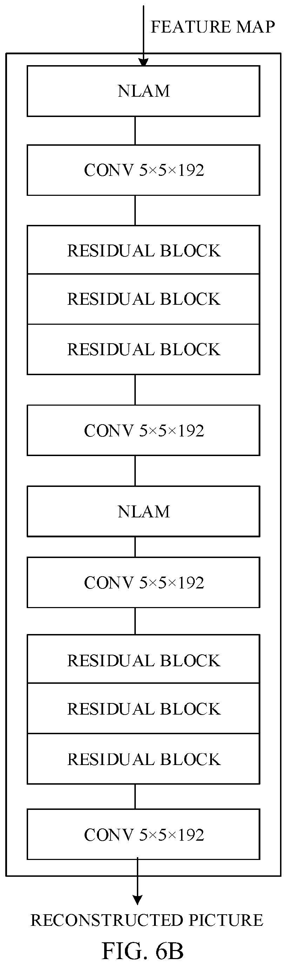

In some implementations, if the network structure of each of the first encoder 402 and the second encoder 404 is as illustrated in FIG. 5B, the network structure of the decoder is as illustrated in FIG. 6B, including four convolution layers, six residual blocks, and two NLAMs, which are a first NLAM, a first convolution layer, three continuous residual blocks, a second convolution layer, a second NLAM, a third convolution layer, three continuous residual blocks, and a fourth convolution layer in sequence along the direction of the network depth.

The first NLAM and the second NLAM illustrated in FIG. 6B have the same network structure as the first NLAM and the second NLAM illustrated in FIG. 5B.

The convolution kernel of each convolution layer illustrated in FIG. 6B has the same size as the convolution kernel of each convolution layer illustrated in FIG. 5B. For example, as illustrated in FIG. 6B, a convolution kernel of each the first, second, third, and fourth convolution layers has a size of $5 \times 5 \times 192$, where $5 \times 5$ is the size of the convolution kernel, that is, the length $\times$ width of the convolution kernel is $5 \times 5$, and 192 is the number of channels. The number of channels may be understood as the number of convolution kernels. That is, each convolution layer in FIG. 6B includes 192 convolution kernels.

It should be noted that FIG. 5A, FIG. 5B, FIG. 6A, and FIG. 6B are merely examples of the neural network of each of the first encoder 402, the second encoder 404, and the decoder involved in the implementations of the present disclosure. The neural network structures of the first encoder 402 and the second encoder 404 involved in the present disclosure include but are not limited to those illustrated in FIG. 5A and FIG. 5B. Similarly, the neural network structure of the decoder involved in the present disclosure includes but is not limited to that illustrated in FIG. 6A and FIG. 6B.

In the present disclosure, before the compression model illustrated in FIG. 4 is trained, a quantization step of the first quantization unit 407 and the second quantization unit 408 is set as a preset quantization step. In addition, encoding modes of the first encoding unit 409 and the second encoding unit 410 are also set.

Training the compression model as illustrated in FIG. 4 in the present disclosure can be understood as training the first encoder 402, the second encoder 404 and the decoder 414 that are based on neural networks in the compression model.

The compression model and the network structures of the first encoder, the second encoder and the decoder in the implementations of the present disclosure are introduced above. The training process of the compression model involved in the implementations of the present disclosure is described in detail below with reference to a specific example.

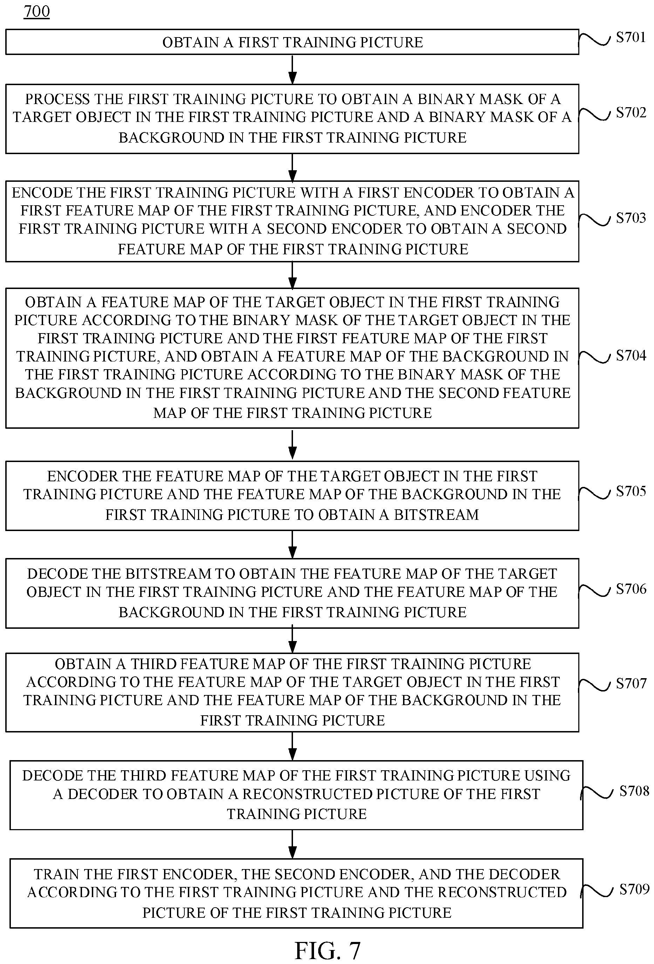

FIG. 7 is a schematic flowchart of a compression model training method 700 provided in implementations of the present disclosure. As illustrated in FIG. 7, the training method in the implementation of the present disclosure includes the following.

At block S701, a first training picture is obtained.

In the present disclosure, training data includes multiple training pictures. The first training picture is any one of the training pictures in the training data. That is, in the training process, the same operations are executed for each training picture in the training data, and the model is trained using each training picture in the training data.

In an implementation, one training picture is input to the compression model during each training round.

In an implementation, in order to improve the training speed for the compression model, multiple training pictures are input into the compression model during each training round, and each of the training pictures does not affect each other.

In the present disclosure, one first training picture in the training data is taken as an example to introduce the training process for the compression model.

At block S702, the first training picture is processed to obtain a binary mask of a target object in the first training picture and a binary mask of a background in the first training picture.

In some implementations, the target object and the background correspond to different encoding bitrates. Therefore, the target object and the background need to be identified in the first training picture.

In some implementations, semantic segmentation is performed on the first training picture to obtain the binary mask of the target object and the binary mask of the background in the first training picture.

For example, as illustrated in FIG. 4, the first training picture is input into the target segmentation unit to obtain the semantic segmentation result of the first training picture. Specifically, the first training picture is input into a target segmentation neural network so as to obtain the semantic segmentation result of the first training picture. Next, the semantic segmentation result is processed to obtain several groups of binary matrices, which correspond to the binary mask of the target object in the first training picture and the binary mask of the background in the first training picture respectively. Assume that the first training picture includes multiple target objects. When semantic segmentation is performed on the first training picture, target objects of different types in the first training picture correspond to different semantic segmentation results. For example, an element that is 1 in the semantic segmentation result of the first training picture may be set to True, and an element that is not 1 may be set to False. Then the Boolean matrix is converted into a float matrix with 0 and 1 to obtain a binary mask of a target object of a type corresponding to 1. For another example, an element that is 2 in the semantic segmentation result of the first training picture may be set to True, and an element that is not 2 may be set to False. Then the Boolean matrix is converted into a float matrix with 0 and 1 to obtain a binary mask of a target object of a type corresponding to 2. Similarly, binary masks of target objects of all types in the first training picture may be obtained.

Then, the binary mask of the background in the first training picture is obtained by subtracting the sum of the binary masks of the target objects from a matrix having the same size as the binary mask of the target object and with all elements being 1.

As can be seen from the above, the binary mask of the target object and the binary mask of the background are each a two-dimensional matrix with a size of h $\times$ w, where h represents the length of the binary mask of the target object and the binary mask of the background, and w represents the width of the binary mask of the target object and the binary mask of the background.

It should be noted that, in this operation, before performing semantic segmentation on the first training picture using the target segmentation neural network, the target segmentation neural network needs to be trained. For example, all categories of the targets are numbered using positive integers, such as 1, 2.... A picture in a training set is input into the target segmentation network to obtain a semantic segmentation result. The semantic segmentation result is a two-dimensional matrix, with an element in the background area has a value of 0 and an element in each target area has a value of the positive integer corresponding to the corresponding category. An error between the output semantic segmentation result and a correct segmentation label is calculated and used to perform back propagation, so as to optimize a network model parameter.

In some implementations, the target segmentation neural network used in this operation is a ResNet34 network which is a simplified ResNet101. The network consists of 34 residual blocks, and introduces hole convolution, pooling and full convolution conditional random fields (CRFs) to improve segmentation accuracy.

At block S703, the first training picture is encoded with a first encoder to obtain a first feature map of the first training picture, and the first training picture is encoded with a second encoder to obtain a second feature map of the first training picture.

In some implementations, the encoding bitrate provided by the second encoder is lower than the encoding bitrate provided by the first encoder.

In some implementations, the encoding bitrate provided by the second encoder is higher than the encoding bitrate provided by the first encoder.

In some implementations, the encoding bitrate provided by the second encoder is the same as the encoding bitrate provided by the first encoder.

In the present disclosure, both the first encoder and the second encoder are neural-network-based encoders, and the network structures of the first encoder and the second encoder are the same, which are as illustrated in FIG. 5A or FIG. 5B.

In some implementations, the model parameters of the first encoder and the second encoder are different. For example, the encoding bitrate provided by the first encoder is different from the encoding bitrate provided by the second encoder. For example, the encoding bitrate provided by the first encoder is higher than the encoding bitrate provided by the second encoder.

The size of the first training picture is H $\times$ W $\times$ 3, where H represents the length of the first training picture, W represents the width of the first training picture, and 3 represents RGB three channels.

The first training picture is input into the first encoder, and the first encoder outputs a feature map of the first training picture. For ease of description, the feature map is referred to as the first feature map of the first training picture. The size of the first feature map is c $\times$ h $\times$ w, where c is the number of channels and is determined according to the number of convolution kernels, for example, the number of channels c is understood as the number of convolution kernels, h represents the length of the first feature map, and w represents the width of the first feature map.

Similarly, the first training picture is input into the second encoder, and the second encoder outputs a feature map of the first training picture. For ease of description, the feature map is referred to as the second feature map of the first training picture. The size of the second feature map is c $\times$ h $\times$ w. That is, the first feature map and the second feature map have the same size.

In some implementations, because the encoding bitrate provided by the first encoder is greater than the encoding bitrate provided by the second encoder, the first feature map is referred to as a high-bitrate feature map, and the second feature map is referred to as a low-bitrate feature map.

At block S704, a feature map of the target object in the first training picture is obtained according to the binary mask of the target object in the first training picture and the first feature map of the first training picture, and a feature map of the background in the first training picture is obtained according to the binary mask of the background in the first training picture and the second feature map of the first training picture.

It should be noted that the binary mask of the target object and the binary mask of the background are obtained through downsampling. The binary mask of the target object and the binary mask of the background have the same length and width as the first feature map and the second feature map, both being h × w.

It can be seen from the above that, the binary mask of the target object and the binary mask of the background are each a two-dimensional matrix, i.e., the size is h × w. The first feature map and the second feature map are each a three-dimensional matrix with the size of h × w × c. In order to facilitate subsequent calculation, the binary mask of the target object and the binary mask of the background are each converted into a three-dimensional matrix. Specifically, in the channel direction, the binary mask of the target object and the binary mask of the background are replicated c times to obtain a three-dimensional binary mask of the target object and a three-dimensional binary mask of the background, where the binary masks of the target object on each channel are the same, and the binary masks of the background on each channel are the same.

After the sizes of the binary mask of the target object and the binary mask of the background are converted to be the same as the sizes of the first feature map and the second feature map, the feature map of the target object in the first training picture is obtained according to the binary mask of the target object in the first training picture and the first feature map of the first training picture, and the feature map of the background in the first training picture is obtained according to the binary mask of the background in the first training picture and the second feature map of the first training picture. Specifically, the obtaining manner includes but is not limited to the following.

In a possible implementation, for each channel, each element in the binary mask of the target object in the first training picture is multiplied by a corresponding element in the first feature map of the first training picture, so as to obtain the feature map of the target object in the first training picture, and each element in the binary mask of the background in the first training picture is multiplied by a corresponding element in the second feature map of the first training picture, so as to obtain the feature map of the background in the first training picture. For example, c=3, that is, the first feature map and the second feature map each include three channels, which are respectively referred to as channel 1, channel 2, and channel 3. Each channel corresponds to one sub-feature map, that is, the first feature map and the second feature map each include three sub-feature maps. Each sub-feature map is a two-dimensional matrix and has a size of h × w. For channel 1, each element in the sub-feature map corresponding to channel 1 in the first feature map is multiplied by a corresponding element in the binary mask of the target object to obtain a sub-feature map of the target object corresponding to the channel 1. For channel 2, each element in the sub-feature map corresponding to channel 2 in the first feature map is multiplied by a corresponding element in the binary mask of the target object to obtain a sub-feature map of the target object corresponding to channel 2. For channel 3, each element in a sub-feature map corresponding to channel 3 in the first feature map is multiplied by a corresponding element in the binary mask of the target object to obtain a sub-feature map of the target object corresponding to channel 3. The sub-feature maps of the target object corresponding to channel 1, channel 2 and channel 3 form the three-dimensional feature map of the target object, and the size thereof is h × w × c. Similarly, each element in the sub-feature map corresponding to channel 1 in the second feature map is multiplied by a corresponding element in the binary mask of the background to obtain the sub-feature map of the background corresponding to channel 1. For channel 2, each element in a sub-feature map corresponding to the channel 2 in the second feature map is multiplied by a corresponding element in the binary mask of the background to obtain a sub-feature map of the background corresponding to channel 2. For channel 3, each element in a sub-feature map corresponding to the channel 3 in the second feature map is multiplied by a corresponding element in the binary mask of the background to obtain a sub-feature map of the background corresponding to the channel 3. The sub-feature maps of the background corresponding to channel 1, channel 2 and channel 3 form the three-dimensional feature map of the background, and the size thereof is h × w × c.

At block S705, the feature map of the target object in the first training picture and the feature map of the background in the first training picture are encoded to obtain a bitstream.

In the present disclosure, various elements in the feature map of the target object and the feature map of the background determined above are float numbers.

In some implementations, the feature map of the target object with float numbers and the feature map of the background with float numbers may be directly encoded to generate the bitstream.

In some implementations, the feature map of the target object in the first training picture and the feature map of the background in the first training picture are quantized, that is, the feature map with float numbers is quantized into the feature map with integer numbers. It can be seen from FIG. 4 that, the feature map of the target object is quantized using the first quantization unit, and the feature map of the background is quantized using the second quantization unit, where the first quantization unit and the second quantization unit may have the same or different quantization steps, which is not limited in the present disclosure. At the beginning of the model training, quantization steps of the first quantization unit and the second quantization unit are preset. The quantized feature map of the target object in the first training picture and the quantized feature map of the background in the first training picture are encoded to obtain the bitstream.

In some implementations, the bitstream generated by encoding may be a binary bitstream.

In the present disclosure, the feature map of the target object and the feature map of the background are encoded separately. For example, the feature map of the target object is encoded to obtain a sub-bitstream of the target object, and the feature map of the background is encoded to obtain a sub-bitstream of the background. Therefore, the bitstream finally generated by the encoder includes at least the sub-bitstream of the target object and the sub-bitstream of the background.

In some implementations, in the bitstream finally generated by the encoder, the sub-bitstream of the target object is located before the sub-bitstream of the background.

In some implementations, in the bitstream finally generated by the encoder, the sub-bitstream of the target object is located after the sub-bitstream of the background.

In the present disclosure, during the encoding process at the encoder side, the feature map of the target object is encoded with a first encoding bitrate to generate the sub-bitstream of the target object, and the feature map of the background is encoded with a second encoding bitrate to generate the sub-bitstream of the background. In some implementations, the first encoding bitrate is the same as the second encoding bitrate, that is, the encoding bitrate corresponding to the sub-bitstream of the target object is the same as the encoding bitrate corresponding to the sub-bitstream of the background. In some implementations, the first encoding bitrate is different from the second encoding bitrate. For example, the first encoding bitrate is higher than the second encoding bitrate, i.e., the encoding bitrate corresponding to the sub-bitstream of the target object is higher than the encoding bitrate corresponding to the sub-bitstream of the background.

At block S706, the bitstream is decoded to obtain the feature map of the target object in the first training picture and the feature map of the background in the first training picture.

Referring to FIG. 4, after receiving the bitstream, the first decoding unit parses the bitstream to obtain the feature map of the target object in the first training picture. For example, the first decoding unit parses the sub-bitstream of the target object in the received bitstream to obtain the feature map of the target object in the first training picture. After receiving the bitstream, the second decoding unit parses the bitstream to obtain the feature map of the background in the first training picture. For example, the second decoding unit parses the sub-bitstream of the background in the received bitstream to obtain the feature map of the background in the first training picture.

In some implementations, if the feature map of the target object and the feature map of the background are encoded using entropy encoding at block S705, the bitstream is decoded using entropy decoding to obtain the feature map of the target object and the feature map of the background at block S706. That is to say, the first decoding unit and the second decoding unit may be understood as entropy decoding units.

At block S707, a third feature map of the first training picture is obtained according to the feature map of the target object in the first training picture and the feature map of the background in the first training picture.

Specifically, after the feature map of the target object and the feature map of the background in the first training picture are decoded from the bitstream according to the foregoing operations, the third feature map of the first training picture is obtained according to the feature map of the target object and the feature map of the background.

In some implementations, the feature map of the target object in the first training picture is added with the feature map of the background in the first training picture to obtain the third feature map of the first training picture. As described above, the feature map of the target object and the feature map of the background have the same size, both being h × w × c. For each channel, each element in the feature map of the target object is added with the corresponding element in the feature map of the background to obtain the feature map with the size of h × w × c, and the feature map may be referred to as the third feature map of the first training picture. For example, c=3, that is, the feature map of the target object and the feature map of the background each include three channels, which are respectively channel 1, channel 2, and channel 3. Each channel corresponds to one sub-feature map, that is, the feature map of the target object and the feature map of the background each include three sub-feature maps. Each sub-feature map is a two-dimensional matrix with a size of h × w. Each element in the sub-feature map corresponding to channel 1 in the feature map of the target object is added with the corresponding element in the sub-feature map corresponding to channel 1 in the feature map of the background to obtain the third sub-feature map of the first training picture corresponding to channel 1. Each element in the sub-feature map corresponding to channel 2 in the feature map of the target object is added with the corresponding element in the sub-feature map corresponding to channel 2 in the feature map of the background to obtain the third sub-feature map of the first training picture corresponding to channel 2. Each element in the sub-feature map corresponding to channel 3 in the feature map of the target object is added with the corresponding element in the sub-feature map corresponding to channel 3 in the feature map of the background to obtain the third sub-feature map of the first training picture corresponding to channel 3. The third sub-feature maps of the first training picture corresponding to the channel 1, the channel 2, and the channel 3 together form the three-dimensional third feature map of the first training picture, where the size of the third feature map is h × w × c.

At block S708, the third feature map of the first training picture is decoded using a decoder to obtain a reconstructed picture of the first training picture.

The decoder in the present disclosure is a neural-network-based decoder which has a network structure as illustrated in FIG. 6A or FIG. 6B. In other words, if the first encoder and the second encoder have the network structure as illustrated in FIG. 5A, then the decoder has the network structure as illustrated in FIG. 6A. If the first encoder and the second encoder have the network structure illustrated in FIG. 5B, then the decoder has the network structure illustrated in FIG. 6B.

The decoder illustrated in FIG. 6A or FIG. 6B is used to decode the third feature map of the first training picture to obtain the reconstructed picture of the first training picture.

The size of the obtained reconstructed picture of the first training picture is the same as the size of the first training picture, which is H × W × 3.

At block S709, the first encoder, the second encoder, and the decoder are trained according to the first training picture and the reconstructed picture of the first training picture.

It can be seen from FIG. 4 that the compression model has the input of the first training picture, and outputs the reconstructed picture of the first training picture. By calculating a difference between the reconstructed picture and the first training picture, the first encoder, the second encoder and the decoder in the compression model are reversely trained.

In some implementations, the operations at block S709 includes the following operations at blocks S709-A1 and S709-A2.

At block S709-A1, a first loss function is constructed.

At block S709-A2, the first encoder, the second encoder, and the decoder are trained according to the first training picture, the reconstructed picture of the first training picture, and the first loss function.

In an example, the first loss function is constructed according to a loss between the first training picture and the reconstructed picture.

In an example, the first loss function is constructed according to the loss between the first training picture and the reconstructed picture, and the encoding bitrate provided by the first encoder and the encoding bitrate provided by the second encoder.

For example, the first loss function is constructed according to the following formula (1):

$$L = \lambda \times D + a_1 R_{bkg} + a_2 R_{obj} \tag{1}$$

where D represents the loss between the reconstructed picture and the first training picture, $R_{obj}$ represents the encoding bitrate provided by the first encoder, $R_{bkg}$ represents the encoding bitrate provided by the second encoder, $\lambda$, $a_1$, and $a_2$ are variables, and $a_1 > a_2$.

In the present disclosure, by setting $a_1 > a_2$, $R_{bkg}$ may be smaller than $R_{obj}$, i.e., the encoding bitrate of the target object area is higher than the encoding bitrate of the background area.

In the present disclosure, the average bitrate for the model may be adjusted by setting different 2. The average bitrate for the compression model may be determined according to a product of the encoding bitrate of the target object area and the number of pixels in the target object area, a product of the encoding bitrate of the background area and the number of pixels in the background area, and a total number of pixels in the first training picture. For example, a value obtained by dividing a sum of the product of the encoding bitrate of the target object area and the number of pixels in the target object area and the product of the encoding bitrate of the background area and the number of pixels in the background area, by the total number of pixels in the first training picture, is taken as the average bitrate for the compression model.

In some implementations, the loss between the reconstructed picture and the first training picture is calculated according to an existing method. For example, a difference between a pixel value of each pixel in the first training picture and a pixel value of the corresponding pixel in the reconstructed picture is determined as the loss between the reconstructed picture and the first training picture.

In some implementations, $R_{bkg}$ is determined according to formula (2), and $R_{bkg}$ is determined according to formula (3):

$$R_{obj} = -\sum \log_2(P_{obj}) - \sum \log_2(P_{obj}^h) \tag{2}$$

$$R_{bkg} = -\sum \log_2(P_{bkg}) - \sum \log_2(P_{bkg}^h) \tag{3}$$

where $P_{obj}$ and $P_{bkg}$ each are a conditional probability of a latent feature map, $P_{obj}^h$ and $P_{bkg}^h$ each are a factorization probability of a hyper feature map. During the model training, $P_{obj}$, $P_{bkg}$, $P_{obj}^h$ and $P_{bkg}^h$ may be output by an information entropy calculation network. For example, the feature map of the target object generated at block S704 or S707 is input into the information entropy calculation network to obtain $P_{obj}$ and $P_{obj}^h$ corresponding to the feature map of the target object, and the feature map of the background generated at block S704 or S707 is input into the information entropy calculation network, for example, an entropy engine, to obtain $P_{bkg}$ and $P_{bkg}^h$ corresponding to the feature map of the background. Reference for details is made to the related art, which is not repeated herein.

During model training, firstly, $\lambda$, $a_1$ and $a_2$ are initialized, where $a_1 > a_2$. The operations at blocks S701 to S708 are executed, where the first training picture is input into the compression model, and the compression model outputs the reconstructed picture of the first training picture. The loss D between the reconstructed picture and the first training picture is calculated in the manner described above, and the encoding bitrate $R_{obj}$ provided by the first encoder and the encoding bitrate $R_{bkg}$ provided by the second encoder are calculated according to formulas (2) and (3). The calculated D, $R_{obj}$ and $R_{bkg}$ are input into formula (1) to calculate the loss of this round of training. If the loss does not reach an expected value, then by updating $\lambda$, $a_1$ and $a_2$, where $a_1 > a_2$, the operations at blocks S701 to S708 are repeated to perform end-to-end training until the training ending condition is met. The training ending condition may be that the number of training rounds reaches a preset value, or the loss reaches the expected value.

In the present disclosure, a first encoder, a second encoder, and a decoder are placed in a compression model for end-to-end training, thereby improving the accuracy of training.

The training process of the compression model is introduced in detail above. After the compression model is trained, the visual task network is trained.

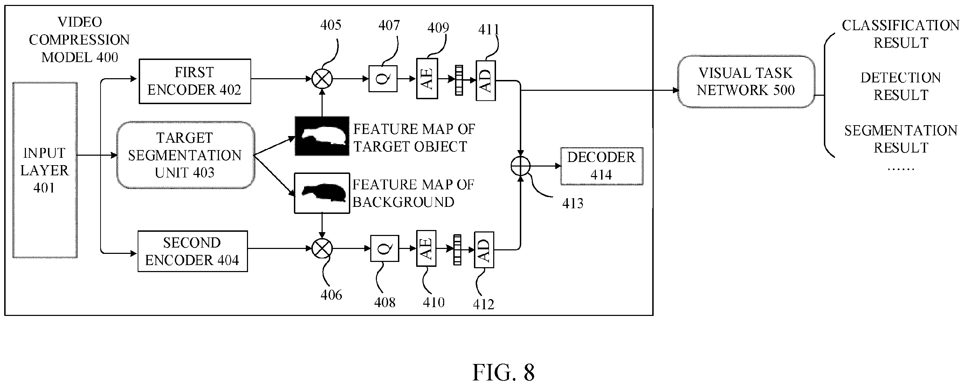

FIG 8 is a schematic diagram of an intelligent coding framework provided in implementations of the present disclosure. As illustrated in FIG. 8, the intelligent coding framework in the implementations of the present disclosure further includes a visual task network 500 in addition to the compression model illustrated in FIG. 4. The visual task network 415 may be a picture classification network, a target detection network, a target segmentation network, and the like. The visual task network 500 is connected to an output end of the first decoding unit 411 in the compression model 400. The first decoding unit 411 parses the bitstream to obtain the feature map of the target object, and inputs the feature map of the target object into the visual task network 500. The visual task network 500 outputs a corresponding prediction result.

The visual task network 500 is a neural network, and needs to be trained before being used. Specifically, after the compression model 400 is trained according to the method illustrated in FIG. 7, the visual task network 500 is trained by using the feature map of the target object output by the trained compression model 400.

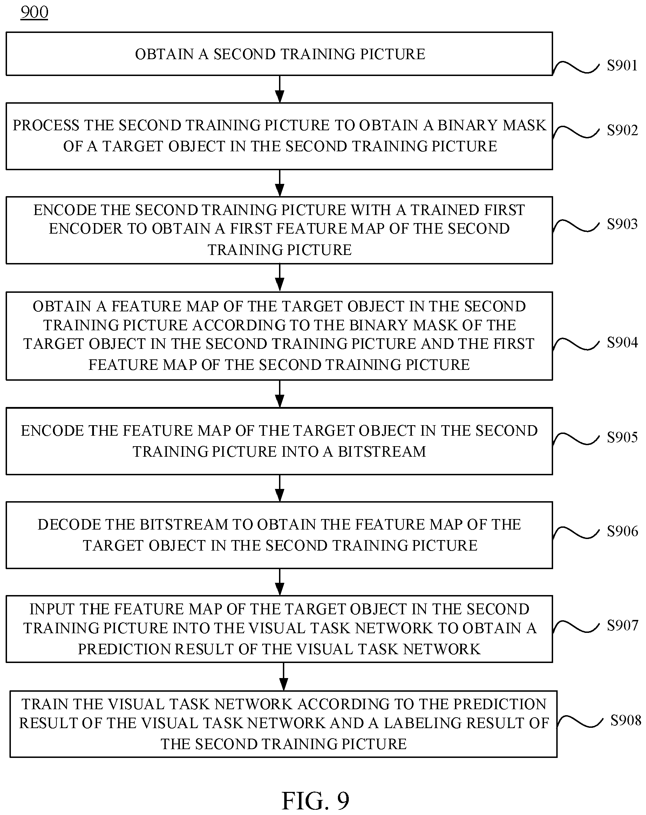

The specific training process of the visual task network will be described in detail below with reference to FIG. 9.

FIG. 9 is a schematic flowchart of a training method 900 for the visual task network according to implementations of the present disclosure. The method includes the following.

At block S901, a second training picture is obtained.

The second training picture in this block may be the same as or different from the first training picture at block S701. A size of the second training picture may be the same as or different from that of the first training picture, which is not limited in the present disclosure.

In an implementation, one training picture is input to the intelligent coding framework during each training round.

In an implementation, in order to improve a training speed of the visual task network, multiple training pictures are input into the intelligent coding framework during each training round, and each of the training pictures does not affect each other.

At block S902, the second training picture is processed to obtain a binary mask of a target object in the second training picture. For example, semantic segmentation is performed on the second training picture to obtain the binary mask of the target object in the second training picture.

Specifically, the operation at block S902 is implemented basically the same as that at block S702. Reference may be made to block S702 and will not be detailed herein.

At block S903, the second training picture is encoded with a trained first encoder to obtain a first feature map of the second training picture.

The network structure of the first encoder may be as illustrated in FIG. 5A or FIG. 5B, where the second training picture is input into the trained first encoder, and the trained first encoder outputs the first feature map of the second training picture.

Specifically, the operation at block S903 is implemented basically the same as that at block S702. Reference may be made to block S703 and will not be detailed herein.

At block S904, a feature map of the target object in the second training picture is obtained according to the binary mask of the target object in the second training picture and the first feature map of the second training picture. For example, the binary mask of the target object in the second training picture is multiplied by the first feature map of the second training picture to obtain the feature map of the target object in the second training picture.

At block S905, the feature map of the target object in the second training picture is encoded into a bitstream.

In some implementations, the operations at block S905 include quantizing the feature map of the target object in the second training picture and encoding the quantized feature map of the target object in the second training picture into the bitstream.

At block S906, the bitstream is parsed to obtain the feature map of the target object in the second training picture. For example, the bitstream is parsed by using the first decoding unit in FIG. 8 to obtain the feature map of the target object in the second training picture.

Reference for implementations of the operations at blocks S904 to S906 may be made to the description for blocks S704 to S706, which will not be repeated herein. Specifically, the first training picture at blocks S704 to S706 may be replaced with the second training picture.

At block S907, the feature map of the target object in the second training picture is input into the visual task network to obtain a prediction result of the visual task network.

At block S908, the visual task network is trained according to the prediction result of the visual task network and a labeling result of the second training picture.

In one training round, the operations at blocks S901 to S906 are performed to obtain the feature map of the target object in the second training picture and to train the visual task network using the obtained feature map of the target object in the second training picture. Specifically, the obtained feature map of the target object in the second training picture is input into the visual task network, and the visual task network outputs the corresponding prediction result. For example, if the visual task network is a picture classification network, the prediction result output by the visual task network is a class/type of the target object in the second training picture. For example, if the visual task network is a target detection network, the prediction result output by the visual task network is a detection block of the target object in the second training picture, that is, the detection block is used to enclose the target object in the second training picture. For example, if the visual task network is a target segmentation network, the prediction result output by the visual task network is the target object segmented from the second training picture, that is, the target object is segmented from the second neural network according to an outline contour of the target object.

According to the above operations, after the feature map of the target object in the second training picture is input into the visual task network, the prediction result output by the visual task network is obtained, and the visual task network is trained according to the prediction result of the visual task network and the labelling result of the second training picture. For example, the visual task network is trained according to the difference between the predicted result of the visual task network and the labeling result of the second training picture and a direction.

In some implementations, the operations at block S908 includes operations at blocks S908-A1 and S908-A2:

At block S908-A1, a second loss function corresponding to the visual task network is constructed according to a type of the visual task network.

At block S908-A2, the visual task network is trained according to the second loss function, the prediction result of the visual task network, and the labeling result of the second training picture.

It should be noted that different types of neural task networks may correspond to different loss functions. For example, a loss function corresponding to the picture classification network is different from a loss function corresponding to the target segmentation network. Therefore, in the present disclosure, the second loss function corresponding to the visual task network is constructed according to the type of the visual task network. For example, if the visual task network is the picture classification network, the second loss function corresponding to the picture classification network is constructed. If the visual task network is the target detection network, the second loss function corresponding to the target detection network is constructed. If the visual task network is the target segmentation network, the second loss function corresponding to the target segmentation network is constructed.

The visual task network in the present disclosure is an existing visual task network, and the second loss function corresponding to the visual task network may be constructed with reference to the existing technologies, which will not be described herein again.

Then, the visual task network is trained according to the second loss function, the prediction result of the visual task network and the labeling result of the second training picture. Operations at blocks S901 to S908 are repeated until a training ending condition of the visual task network is satisfied. The training ending condition of the visual task network may be that the number of training rounds reaches a preset value, or the loss reaches an expected value.

In some implementations, the compression model and the visual neural network may be combined to implement end-to-end training, the specific process thereof is basically the same as the training process above, and reference may be made to the above implementations.

The training process of the compression model and the visual task network in the intelligent coding framework are described in detail in FIG. 7 to FIG. 9. The coding process using the trained intelligent coding framework is described in the following.

First, the encoding side is taken as an example to describe an encoding process.

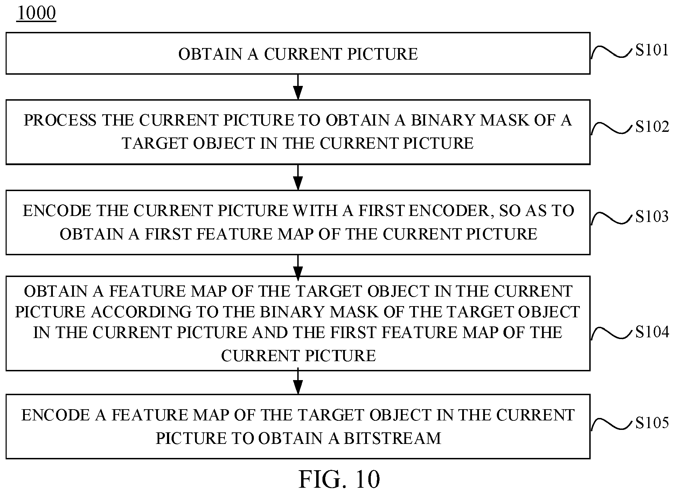

FIG. 10 is a schematic flowchart of a video encoding method 1000 according to implementations of the present disclosure. The implementation of the present disclosure may be performed by the video encoder illustrated in FIG. 2. As illustrated in FIG. 10, the method includes the following.

At block S101, a current picture is obtained. The current picture may be understood as a picture to-be-encoded or a part of the picture to-be-encoded in a video stream. Alternatively, the current picture may be understood as a single picture to-be-encoded or a part of the single picture to-be-encoded.

At block S 102, the current picture is processed to obtain a binary mask of a target object in the current picture. For example, semantic segmentation is performed on the current picture to obtain the binary mask of the target object in the current picture. For details, reference may be made to the description for S702, where the first training picture is replaced with the current picture.

At block S103, the current picture is encoded with a first encoder, so as to obtain a first feature map of the current picture. The first encoder is a neural-network-based encoder. The first encoder is trained using the method according to the foregoing implementations, and the current picture is encoded with the trained first encoder to obtain the first feature map of the current picture.

At block S104, a feature map of the target object in the current picture is obtained according to the binary mask of the target object in the current picture and the first feature map of the current picture. For example, a product of the binary mask of the target object in the current picture and the first feature map of the current picture is used as the feature map of the target object in the current picture. For details, reference may be made to the description for S704, where the first training picture is replaced with the current picture.

At block S105, a feature map of the target object in the current picture is encoded to obtain a bitstream.

In some implementations, operations at block S 105 include the following. The feature map of the target object in the current picture is quantized. The quantized feature map of the target object in the current picture is encoded to obtain the bitstream.

In the present disclosure, the first encoder providing a higher encoding bitrate is used to encode the target object in the current picture, so as to obtain the feature map of the target object. The feature map of the target object is encoded into the bitstream. In this way, the decoding side can directly obtain the feature map of the target object from the bitstream and input the feature map into the visual task network, without re-determination of the feature map of the target object, thereby improving the task processing efficiency of the visual task network.

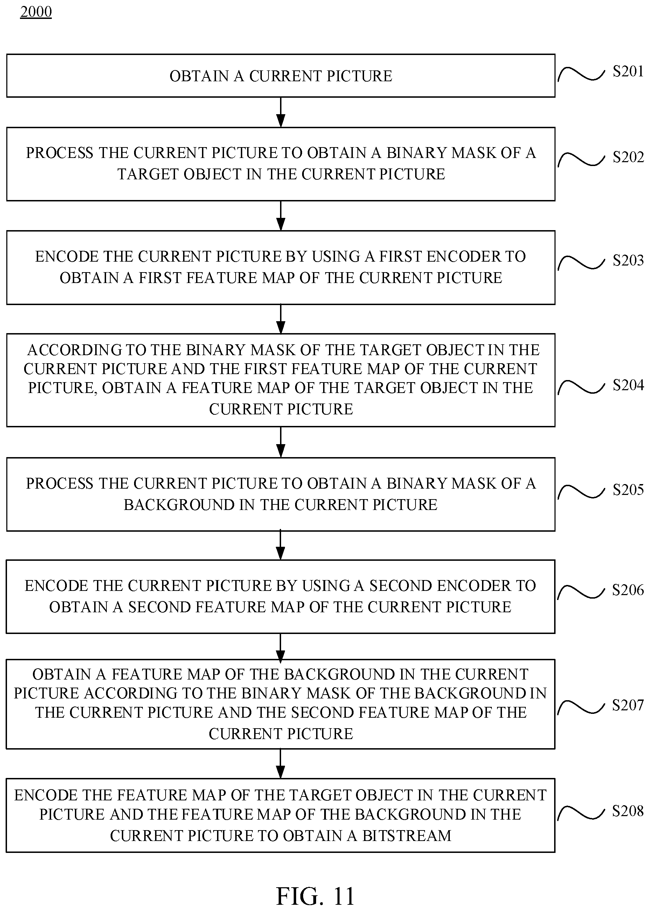

FIG. 11 is a schematic flowchart of a video encoding method 2000 according to implementations of the present disclosure. The method includes the following.

At block S201, a current picture is obtained.

At block S202, the current picture is processed to obtain a binary mask of a target object in the current picture. For example, semantic segmentation is performed on the current picture to obtain the binary mask of the target object in the current picture. For details, reference may be made to the description for S702.

At block S203, the current picture is encoded by using a first encoder to obtain a first feature map of the current picture. For example, the current picture is encoded by using a trained first encoder to obtain the first feature map of the current picture.

At block S204, according to the binary mask of the target object in the current picture and the first feature map of the current picture, a feature map of the target object in the current picture is obtained. For example, a product of the binary mask of the target object in the current picture and the first feature map of the current picture is used as the feature map of the target object in the current picture. For details, reference may be made to the description for S704, where the first training picture is replaced with the current picture.

At block S205, the current picture is processed to obtain a binary mask of a background in the current picture. For example, semantic segmentation is performed on the current picture to obtain the binary mask of the background in the current picture. For details, reference may be made to the description for S705, where the first training picture is replaced with the current picture.

At block S206, the current picture is encoded by using a second encoder to obtain a second feature map of the current picture. Specifically, a trained second encoder is used to encode the current picture to obtain the second feature map of the current picture. The second encoder is also a neural-network-based encoder. A neural network corresponding to the first encoder and a neural network corresponding to the second encoder have the same network structure, and an encoding bitrate provided by the second encoder is lower than an encoding bitrate provided by the first encoder.

At block S207, a feature map of the background in the current picture is obtained according to the binary mask of the background in the current picture and the second feature map of the current picture. For example, a product of the binary mask of the background in the current picture and the second feature map of the current picture is used as the feature map of the background in the current picture. For details, reference may be made to the description for S704, where the first training picture is replaced with the current picture.

At block S208, the feature map of the target object in the current picture and the feature map of the background in the current picture are encoded to obtain a bitstream. For example, the feature map of the target object in the current picture is encoded to obtain a sub-bitstream of the target object, and the feature map of the background in the current picture is encoded to obtain a sub-bitstream of the background. That is, the bitstream finally generated at the encoding side at least includes the sub-bitstream of the target object and the sub-bitstream of the background. In some implementations, the feature map of the target object and the feature map of the background in the current picture are quantized, and the quantized feature map of the target object and the quantized feature map of the background in the current picture are encoded to obtain the bitstream.

It should be noted that, the execution order between operations at blocks S202 to 5204 and operations at blocks S205 to S207 may be arbitrary. In other words, operations at blocks S202 to S204 may be first executed to process the target object, and operations at blocks S205 to S207 may be then executed to process the background. Alternatively, operations at blocks S205 to S207 may be first executed to process the background, and operations at blocks S202 to S204 may be then executed to process the target object. Operations at blocks S202 to S204 and operations at blocks S205 to S207 may also be executed at the same time, which is not limited in the present disclosure.

In this disclosure, the feature map of the target object and the feature map of the background in the current picture are separated and respectively encoded into bitstreams with different bitrates. In this way, intelligent analysis is directly performed on the feature map of the target object, so that the decoding process is omitted, realizing the efficient man-machine hybrid vision-oriented task.

Further, a comparison result between a picture classification task performed on the reconstructed RGB picture after decoding and a picture classification task directly performed on the feature map of the target object in the present disclosure, is illustrated in Table 1.

Table 1

| Average bitrate | 0.20 | 0.39 | 0.52 | uncompressed |
|---|---|---|---|---|
| (background bitrate, target object bitrate) | (0.14, 0.38) | (0.29, 0.70) | (0.40, 0.92) | |
| accuracy/% | 75.38 | 75.63 | 75.42 | 78.98 |

As can be seen from Table 1, the technical solution of the present disclosure brings the accuracy close to the accuracy of performing the picture classification task on the reconstructed RGB picture after decoding. However, since the decoder side does not need to redetermine the feature map of the target object in the present disclosure, the efficiency of the whole visual task is improved. That is, the technical solution of the present disclosure improves the execution efficiency of the visual task while ensuring the accuracy of the visual task.

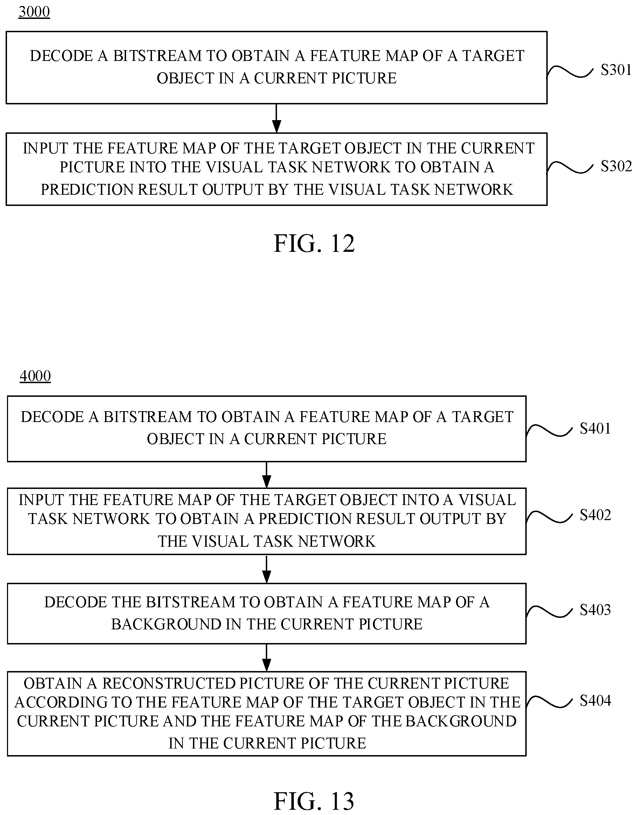

The encoding process involved in the implementations of the present disclosure is introduced above. Based on the foregoing implementations, the decoding process involved in the implementations of the present disclosure is introduced below with reference to FIG. 12 and FIG. 13.

FIG. 12 is a schematic flowchart of a video decoding method 3000 according to implementations of the present disclosure. It may be understood that the implementation of the present disclosure may be performed by the video decoder illustrated in FIG. 3. As illustrated in FIG. 12, the decoding process includes the following.

At block S301, a bitstream is decoded to obtain a feature map of a target object in a current picture.

Specifically, after receiving the bitstream, the decoder decodes the bitstream to obtain the feature map of the target object in the current picture from the bitstream. For a specific implementation, reference may be made to the description for S706, where the first training picture is replaced with the current picture.

In the present disclosure, at the encoder side, the feature map of the target object is directly encoded into the bitstream. Therefore, at the decoder side, the feature map of the target object may be directly parsed from the bitstream. In this way, the decoding process can be omitted, and further the decoding process of the feature map of the target object can be improved.

In some implementations, after the feature map of the target object in the current picture is obtained according to S301, the feature map of the target object in the current picture may be directly output.

In some implementations, after the feature map of the target object in the current picture is obtained according to S301, a visual task may be executed using the feature map of the target object, for example, operations at block S302 are executed.

At block S302, the feature map of the target object in the current picture is input into the visual task network to obtain a prediction result output by the visual task network. The visual task network is a classification network, a target detection network or a target segmentation network.

In some implementations, if the encoder quantizes the feature map of the target object in the current picture, operations at block S301 includes decoding the bitstream to obtain the quantized feature map of the target object in the current picture. Correspondingly, operations at block S302 includes inputting the quantized feature map of the target object in the current picture to the visual task network.

In the present disclosure, the feature map of the target object is directly encoded into the bitstream, so that the feature map of the target object can be directed obtained from the bitstream. The feature map of the target object is output, or is input into the visual task network for the execution of the visual task, without determination of the feature map of the target object in the current picture, thereby improving the execution efficiency of the visual task.

FIG. 13 is a schematic flowchart of a video decoding method 4000 according to implementations of the present disclosure. As illustrated in FIG. 13, the method includes the following.

At block S401, a bitstream is decoded to obtain a feature map of a target object in a current picture.

At block S402, the feature map of the target object in the current picture is input into a visual task network to obtain a prediction result output by the visual task network.

At block S403, the bitstream is decoded to obtain a feature map of a background in the current picture.

It should be noted that, operations at blocks S401 and S403 may be executed in any order, that is, operations at block S401 may be executed before S402, may be executed after S402, or may be executed simultaneously with S402.

At block S404, a reconstructed picture of the current picture is obtained according to the feature map of the target object in the current picture and the feature map of the background in the current picture. For example, a feature map of the current picture is obtained by adding the feature map of the target object and the feature map of the background, and the feature map of the current picture is decoded with a decoder to obtain the reconstructed picture of the current picture.

In some implementations, if the feature map of the target object and the feature map of the background are encoder at the encoding side, the decoder adds the quantized feature map of the target object and the quantized feature map of the background to obtain a quantized feature map of the current picture, and decode the quantized feature map of the current picture using the decoder, so as to obtain the reconstructed picture of the current picture.

It should be understood that FIG. 7 and FIG. 9 to FIG. 13 are only examples of the present disclosure, and should not be construed as limitations to the present disclosure.

The implementations of the present disclosure have been described in detail above with reference to the accompanying drawings. However, the present disclosure is not limited to the specific details in the above implementations. Within the scope of the technical concept of the present disclosure, many simple modifications can be made to the technical solutions of the present disclosure, and these simple modifications all fall within the scope of protection of the present disclosure. For example, various specific technical features described in the foregoing implementations may be combined in any suitable manner in case of no conflict, and in order to avoid unnecessary repetition, various possible combination manners are not further described in the present disclosure. For another example, various implementations of the present disclosure may also be combined in any way, and as long as the implementations do not depart from the idea of the present disclosure, they should also be considered as contents disclosed in the present disclosure.

It should also be understood that, in various method implementations of the present disclosure, a sequence number of each of the foregoing processes does not imply an execution sequence, and an execution sequence of each of the processes should be determined according to a function and an internal logic of the process, which should not constitute any limitation to implementations of the present disclosure. In addition, in the implementations of the present disclosure, the term "and/or" is merely an association relationship for describing associated objects, and represents that three relationships may exist. Specifically, A and/or B may represent three cases: A exists independently, A and B exist simultaneously, and B exists independently. In addition, the character "/" in this description generally indicates that the associated objects are in an "or" relationship.

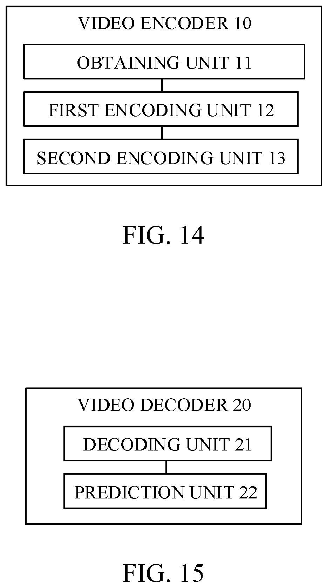

The method implementations of the disclosure are described in detail above with reference to FIG. 7 and FIG. 9 to FIG. 13. In the following, the apparatus implementations will be described in detail with reference to FIG. 14.

FIG. 14 is a schematic block diagram of a video encoder 10 provided in implementations of the disclosure.

As illustrated in FIG. 14, the video encoder 10 includes an obtaining unit 11 and a first encoding unit 12.

The obtaining unit 11 is configured to obtain a current picture.

The first encoding unit 12 is configured to obtain a binary mask of a target object in the current picture by processing the current picture, obtain a first feature map of the current picture by encoding the current picture with a first encoder, obtain a feature map of the target object in the current picture according to the binary mask of the target object in the current picture and the first feature map of the current picture, and encode the feature map of the target object in the current picture to obtain a bitstream.

In some implementations, the first encoding unit 12 is specifically configured to quantize the feature map of the target object in the current picture, and encode the feature map quantized of the target object in the current picture to obtain the bitstream.

In some implementations, the first encoding unit 12 is specifically configured to determine a product of the binary mask of the target object in the current picture and the first feature map of the current picture as the feature map of the target object in the current picture.

In some implementations, the encoder further includes a second encoding unit 13.

The second encoding unit 13 is configured to obtain a binary mask of a background in the current picture by processing the current picture, obtain a second feature map of the current picture by encoding the current picture with a second encoder, obtain a feature map of the background in the current picture according to the binary mask of the background in the current picture and the second feature map of the current picture, and encode the feature map of the background in the current picture into the bitstream.

In some implementations, the second encoding unit 13 is specifically configured to quantize the feature map of the background in the current picture, and encode the feature map quantized of the background in the current picture into the bitstream.

In some implementations, the second encoding unit 13 is specifically configured to determine a product of the binary mask of the background in the current picture and the second feature map of the current picture as the feature map of the background in the current picture.

In an example, the first encoder and the second encoder each are a neural-network-based encoder.

In an example, a neural network corresponding to the first encoder has a same network structure as a neural network corresponding to the second encoder.

In some implementations, the first encoding unit 12 is specifically configured to obtain the binary mask of the target object in the current picture by performing semantic segmentation on the current picture.

In some implementations, the second encoding unit 13 is specifically configured to obtain the binary mask of the background in the current picture by performing semantic segmentation on the current picture.

In some implementations, the bitstream includes a sub-bitstream of the target object and a sub-bitstream of the background, the sub-bitstream of the target object is generated by encoding of the feature map of the target object in the current picture, and the sub-bitstream of the background is generated by encoding of the feature map of the background in the current picture.

In some implementations, an encoding bitrate corresponding to the sub-bitstream of the target object is higher than an encoding bitrate corresponding to the sub-bitstream of the background.

It should be understood that apparatus implementations and method implementations may correspond to each other, and similar descriptions can refer to method implementations. To avoid repetition, details will not be repeated here. Specifically, the video encoder 10 illustrated in FIG. 14 may execute the methods of the present disclosure, and the aforementioned and other operations and/or functions of each unit in the video encoder 10 are respectively used to implement the corresponding processes in methods 1000 and 2000. For simplicity, details will not be repeated here.

FIG. 15 is a schematic block diagram of a video decoder 20 provided in implementations of the disclosure.

As illustrated in FIG. 15, the video decoder 20 includes a decoding unit 21 and a prediction unit 22.

The decoding unit 21 is configured to decode a bitstream to obtain a feature map of a target object in a current picture.

The prediction unit 22 is configured to input the feature map of the target object in the current picture to a visual task network and obtain a prediction result output by the visual task network.

In some implementations, the decoding unit 21 is specifically configured to decode the bitstream to obtain a quantized feature map of the target object in the current picture. Correspondingly, the prediction unit 22 is specifically configured to input the quantized feature map of the target object in the current picture to the visual task network.

In some implementations, the visual task network is a classification network, an object detection network, or an object segmentation network.

In some implementations, the decoding unit 21 is further configured to decode the bitstream to obtain a feature map of a background in the current picture, and obtain a reconstructed picture of the current picture according to the feature map of the target object in the current picture and the feature map of the background in the current picture.

In some implementations, the decoding unit 21 is specifically configured to obtain a feature map of the current picture by adding the feature map of the target object and the feature map of the background, and obtain the reconstructed picture of the current picture by decoding the feature map of the current picture with a decoder.

In some implementations, the decoding unit 21 is specifically configured to decode the bitstream to obtain a quantized feature map of the background, and obtain the reconstructed picture of the current picture according to the quantized feature map of the target object in the current picture and the quantized feature map of the background in the current picture.

In some implementations, the bitstream includes a sub-bitstream of the target object and a sub-bitstream of the background, the sub-bitstream of the target object is generated by encoding of the feature map of the target object in the current picture, and the sub-bitstream of the background is generated by encoding of the feature map of the background in the current picture.

In some implementations, an encoding bitrate corresponding to the sub-bitstream of the target object is higher than an encoding bitrate corresponding to the sub-bitstream of the background.

It should be understood that apparatus implementations and method implementations may correspond to each other, and similar descriptions can refer to method implementations. To avoid repetition, details will not be repeated here. Specifically, the video decoder 20 illustrated in FIG. 15 may execute the method 3000 or 4000 of the present disclosure, and the aforementioned and other operations and/or functions of each unit in the video decoder 20 are respectively used to implement the corresponding processes in methods 3000 and 4000. For simplicity, details will not be repeated here.

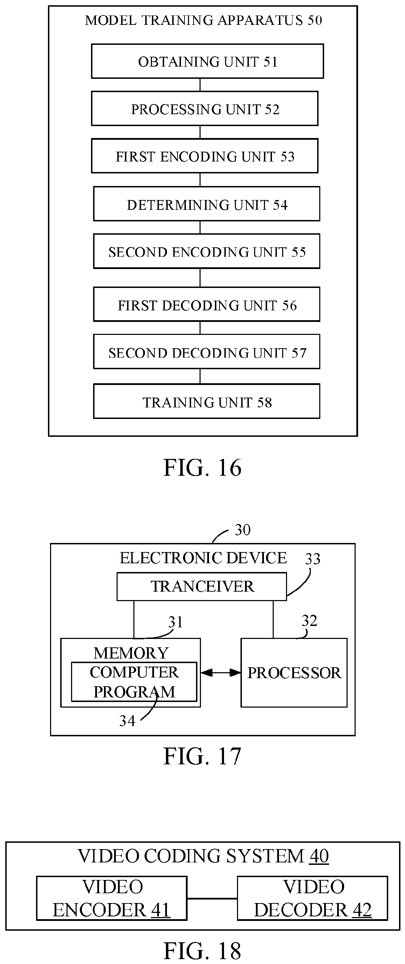

FIG. 16 is a schematic block diagram of a model training apparatus 50 provided in implementations of the disclosure.

As illustrated in FIG. 16, the model training apparatus 50 includes an obtaining unit 51, a processing unit 52, a first encoding unit 53, a determining unit 54, a second encoding unit 55, a first decoding unit 56, a second decoding unit 57, and a training unit 58.

The obtaining unit 51 is configured to obtain a first training picture.

The processing unit 52 is configured to obtain a binary mask of a target object in the first training picture and a binary mask of a background in the first training picture by processing the first training picture.

The first encoding unit 53 is configured to obtain a first feature map of the first training picture by encoding the first training picture with a first encoder, and obtaining a second feature map of the first training picture by encoding the first training picture with a second encoder.

The determining unit 54 is configured to obtain a feature map of the target object in the first training picture according to the binary mask of the target object in the first training picture and the first feature map of the first training picture, and obtaining a feature map of the background in the first training picture according to the binary mask of the background in the first training picture and the second feature map of the first training picture.

The second encoding unit 55 is configured to encode the feature map of the target object in the first training picture and the feature map of the background in the first training picture to obtain a bitstream.

In some implementations, the bitstream includes a sub-bitstream of the target object and a sub-bitstream of the background, the sub-bitstream of the target object is generated by encoding of the feature map of the target object in the current picture, and the sub-bitstream of the background is generated by encoding of the feature map of the background in the current picture.

In some implementations, an encoding bitrate corresponding to the sub-bitstream of the target object is higher than an encoding bitrate corresponding to the sub-bitstream of the background.

The first decoding unit 56 is configured to decode the bitstream to obtain the feature map of the target object in the first training picture and the feature map of the background in the first training picture, and obtain a third feature map of the first training picture according to the feature map of the target object in the first training picture and the feature map of the background in the first training picture.

The second decoding unit 57 is configured to decode the third feature map of the first training picture with a decoder to obtain a reconstructed picture of the first training picture.

The training unit 58 is configured to train the first encoder, the second encoder, and the decoder according to the first training picture and the reconstructed picture of the first training picture.

In some implementations, the processing unit 52 is specifically configured to obtain the binary mask of the target object in the first training picture and the binary mask of the background in the first training picture by performing semantic segmentation on the first training picture.

In some implementations, the determining unit 54 is specifically configured to obtain the feature map of the target object in the first training picture by multiplying the binary mask of the target object in the first training picture by the first feature map of the first training picture, and obtain the feature map of the background in the first training picture by multiplying the binary mask of the background in the first training picture by the second feature map of the first training picture

In some implementations, the first decoding unit 56 is specifically configured to obtain the third feature map of the first training picture by adding the feature map of the target object in the first training picture and the feature map of the background in the first training picture.

In some implementations, the training unit 58 is specifically configured to construct a first loss function, and train the first encoder, the second encoder, and the decoder according to the first training picture, the reconstructed picture of the first training picture, and the first loss function.

In some implementations, the training unit 58 is specifically configured to construct the first loss function according to a loss between the first training picture and the reconstructed picture, and an encoding bitrate provided by the first encoder and an encoding bitrate provided by the second encoder.

In some implementations, the training unit 58 is specifically configured to construct the first loss function according to the following formula:

$$L = \lambda \times D + a_1 R_{bkg} + a_2 R_{obj}$$

where D represents the loss between the reconstructed picture and the first training picture, $R_{obj}$ represents the encoding bitrate provided by the first encoder, $R_{bkg}$ represents the encoding bitrate provided by the second encoder, $\lambda$, $a_1$, and $a_2$ are variables, and $a_1 > a_2$.

In some implementations, the second decoding unit 55 is specifically configured to quantize the feature map of the target object in the first training picture and the feature map of the background in the first training picture, and encode the feature map quantized of the target object in the first training picture and the feature map quantized of the background in the first training picture to obtain the bitstream.

In some implementations, the obtaining unit 51 is further configured to obtain a second training picture.

The processing unit 52 is further configured to obtain a binary mask of a target object in the second training picture by processing the second training picture.

The first encoding unit 53 is further configured to obtain a first feature map of the second training picture by encoding the second training picture with the first encoder trained.

The determining unit 54 is further configured to obtain a feature map of the target object in the second training picture according to the binary mask of the target object in the second training picture and the first feature map of the second training picture.

The second encoding unit 55 is further configured to signal the feature map of the target object in the second training picture into the bitstream.

The first decoding unit 56 is further configured to decode the bitstream to obtain the feature map of the target object in the second training picture.

The training unit 58 is further configured to input the feature map of the target object in the second training picture into the visual task network to obtain a prediction result of the visual task network, and train the visual task network according to the prediction result of the visual task network and a labeling result of the second training picture.

In some implementations, the processing unit 52 is specifically configured to obtain the binary mask of the target object in the second training picture by performing semantic segmentation on the second training picture.

In some implementations, the determining unit 54 is specifically configured to obtain the feature map of the target object in the second training picture by multiplying the binary mask of the target object in the second training picture by the first feature map of the second training picture.

The second encoding unit 55 is configured to quantize the feature map of the target object in the second training picture, and encode the feature map quantized of the target object in the second training picture into the bitstream.

In some implementations, the training unit 58 is specifically configured to construct a second loss function corresponding to the visual task network according to a type of the visual task network, and train the visual task network according to the second loss function, the prediction result of the visual task network, and the labeling result of the second training picture.

It should be understood that apparatus implementations and method implementations may correspond to each other, and similar descriptions can refer to method implementations. To avoid repetition, details will not be repeated here. Specifically, the model training apparatus 50 illustrated in FIG. 16 may execute the method 700 or 900 of the present disclosure, and the aforementioned and other operations and/or functions of each unit in the model training apparatus 50 are respectively used to implement the corresponding processes in methods 700 and 900. For simplicity, details will not be repeated here.

The apparatus and system in the implementations of the present disclosure are described above from the perspective of functional units with reference to the accompanying drawings. It should be understood that, the functional units may be implemented in a form of hardware, software, or a combination of hardware and software units. Specifically, each operation in the method implementations in the present disclosure may be completed by means of an integrated logic circuit of hardware in a processor and/or instructions in the form of software. Operations disclosed in combination with the method implementations in the present disclosure may be directly embodied as being completed by a hardware decoding processor, or completed by using a combination of hardware and software units in a coding processor. Optionally, the software unit may be located in a mature storage medium in the field, such as a random access memory, a flash memory, a read-only memory, a programmable read-only memory, an electrically erasable programmable memory, and a register. The storage medium is located in a memory, and the processor reads information in the memory and completes the operations in the described method implementations in combination with hardware thereof.

FIG 17 is a schematic block diagram of an electronic device 30 according to implementations of the present disclosure.

As illustrated in FIG. 17, the electronic device 30 may be a video encoder, a video decoder, or a model training apparatus according to implementations of the present disclosure. The electronic device 30 may include a memory 33 and a processor 32.

The memory 33 is configured to store a computer program 34 and transmitting the program code 34 to the processor 32. In other words, the processor 32 may invoke the computer program 34 from the memory 33 to implement the method in the implementations of the present disclosure.

For example, the processor 32 may be configured to perform the operations in the method 200 described above in accordance with instructions in the computer program 34.

In some implementations of the present disclosure, the processor 32 may include, but is not limited to a general purpose processor, a digital signal processor (DSP), an application specific integrated circuit (ASIC), a field programmable gate array (FPGA) or another programmable logic device, a discrete gate or transistor logic device, a discrete hardware component, or the like.

In some implementations of the present disclosure, the memory 33 includes but is not limited to a volatile memory and/or a non-volatile memory, where the non-volatile memory may be a read-only memory (ROM), a programmable ROM (PROM), an erasable PROM (EPROM), an electrically erasable EPROM (EEPROM), or a flash memory. Volatile memory may be random access memory (RAM), which serves as an external cache. By way of example and not limitation, many forms of RAM are available, such as static random access memory (SRAM), dynamic RAM (DRAM), a synchronous DRAM (SDRAM), and a double data rate SDRAM (DDR SDRAM), enhanced SDRAM (ESDRAM), synchronous link DRAM (SLDRAM) and direct Rambus RAM (DDR RAM).

In some implementations of the present disclosure, the computer program 34 may be divided into one or more units, and the one or more units are stored in the memory 33 and executed by the processor 32 to complete the method provided in the present disclosure. The one or more units may be a series of computer program instruction segments capable of performing a particular function, the instruction segments describing the execution of the computer program 34 in the electronic device 30.

As illustrated in FIG. 17, the electronic device 30 may further include a transceiver 33, which may be connected to the processor 32 or the memory 33.

The processor 32 may control the transceiver 33 to communicate with other devices, and specifically, transmit information or data to other devices, or receive information or data from other devices. The transceiver 33 may further include one or more antennas.

It should be understood that, components in the electronic device 30 are connected through a bus system, where the bus system further includes a power bus, a control bus, and a state signal bus in addition to a data bus.

FIG 18 is a schematic block diagram of a video coding system 40 according to implementations of the present disclosure.

As illustrated in FIG. 18, the video coding system 40 may include a video encoder 41 and a video decoder 42. The video encoder 41 is configured to execute the video encoding method involved in the implementations of the present disclosure, and the video decoder 42 is configured to execute the video decoding method involved in the implementations of the present disclosure.

The present disclosure also provides a computer storage medium, on which a computer program is stored. The computer program, when executed by a computer, enables the computer to execute the method of the described method implementations. Alternatively, the implementations of the present disclosure further provide a computer program product including instructions. When the instructions are executed by the computer, the computer executes the method of the described method implementation.

When implemented using software, the method may be implemented in whole or in part in the form of a computer program product including one or more computer instructions. When the computer program instructions are loaded and executed on the computer, the processes or functions according to the implementations of the present disclosure are totally or partially generated. The computer may be a general purpose computer, a special purpose computer, a computer network, or other programmable apparatus. The computer instructions may be stored on or transmitted from one computer-readable storage medium to another. For example, the computer instructions may be transmitted from a website, computer, server, or data center by wire (e. g., coax, fiber optics, digital subscriber line (DSL) or wireless (e. g., infrared, wireless, microwave, etc.) transmission to another website, computer, server, or data center. The computer-readable storage medium may be any available medium accessible by the computer, or a data storage device such as a server, a data center, or the like that includes one or more available media arrays. The available medium may be a magnetic medium (e. g., floppy disk, hard disk, magnetic tape), an optical medium (e. g., digital video disc (DVD)), a semiconductor medium (e. g., solid state disk (SSD)), or the like.

Persons of ordinary skill in the art may be aware that, in combination with the examples described in the implementations disclosed in this disclosure, units and algorithm operations may be implemented by electronic hardware, or a combination of computer software and electronic hardware. Whether the functions are executed by hardware or software depends on specific applications and design constraint conditions of the technical solutions. A person skilled in the art may use different methods to implement the described functions for each specific application, but the implementations shall not be considered as beyond the scope of the present disclosure.

In the several implementations provided in the present disclosure, it should be understood that the disclosed systems, apparatuses, and methods may be implemented in other manners. For example, the apparatus implementations described above are merely exemplary. For example, division of the units is merely logical function division, and may be other division in actual implementation. For example, multiple units or components may be combined or integrated into another system, or some features may be ignored or not executed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts illustrated as units may or may not be physical units, may be located in one position, or may be distributed on multiple network elements. A part or all of the units may be selected according to actual requirements to achieve the objectives of the solutions of the implementations. For example, functional units in the implementations of the present disclosure may be integrated into one processing unit, or each of the units may exist alone physically, or two or more units are integrated into one unit.

The foregoing descriptions are merely specific implementations of the present disclosure, but are not intended to limit the scope of protection of the present disclosure. Any variation or replacement readily figured out by a person skilled in the art within the technical scope disclosed in the present disclosure shall belong to the scope of protection of the present disclosure. Therefore, the scope of protection of the present disclosure should be subject to the scope of protection of this claim.

**Claims**

1. A video encoding method, comprising:

   obtaining a current picture;
   obtaining a binary mask of a target object in the current picture by processing the current picture;
   obtaining a first feature map of the current picture by encoding the current picture with a first encoder;
   obtaining a feature map of the target object in the current picture according to the binary mask of the target object in the current picture and the first feature map of the current picture; and
   encoding the feature map of the target object in the current picture to obtain a bitstream.

2. The method of claim 1, wherein encoding the feature map of the target object in the current picture to obtain the bitstream comprises:

   quantizing the feature map of the target object in the current picture; and
   encoding the feature map quantized of the target object in the current picture to obtain the bitstream.

3. The method of claim 1, wherein obtaining the feature map of the target object in the current picture according to the binary mask of the target object in the current picture and the first feature map of the current picture comprises:
   determining a product of the binary mask of the target object in the current picture and the first feature map of the current picture as the feature map of the target object in the current picture.

4. The method of any of claims 1-3, further comprising:

   obtaining a binary mask of a background in the current picture by processing the current picture;
   obtaining a second feature map of the current picture by encoding the current picture with a second encoder;
   obtaining a feature map of the background in the current picture according to the binary mask of the background in the current picture and the second feature map of the current picture; and
   encoding the feature map of the background in the current picture into the bitstream.

5. The method of claim 4, wherein encoding the feature map of the background in the current picture into the bitstream comprises:

   quantizing the feature map of the background in the current picture; and
   encoding the feature map quantized of the background in the current picture into the bitstream.

6. The method of claim 4, wherein obtaining the feature map of the background in the current picture according to the binary mask of the background in the current picture and the second feature map of the current picture comprises:
   determining a product of the binary mask of the background in the current picture and the second feature map of the current picture as the feature map of the background in the current picture.

7. The method of claim 4, wherein the first encoder and the second encoder each are a neural-network-based encoder.

8. The method of claim 7, wherein a neural network corresponding to the first encoder has a same network structure as a neural network corresponding to the second encoder.

9. The method of claim 1, wherein obtaining the binary mask of the target object in the current picture by processing the current picture comprises:
obtaining the binary mask of the target object in the current picture by performing semantic segmentation on the current picture.

10. The method of claim 4, wherein obtaining the binary mask of the background in the current picture by processing the current picture comprises:
obtaining the binary mask of the background in the current picture by performing semantic segmentation on the current picture.

11. The method of claim 4, wherein the second encoder provides an encoding bitrate lower than the first encoder.

12. The method of claim 4, wherein the bitstream comprises a sub-bitstream of the target object and a sub-bitstream of the background, the sub-bitstream of the target object is generated by encoding of the feature map of the target object in the current picture, and the sub-bitstream of the background is generated by encoding of the feature map of the background in the current picture.

13. The method of claim 12, wherein an encoding bitrate corresponding to the sub-bitstream of the target object is higher than an encoding bitrate corresponding to the sub-bitstream of the background.

14. A video decoding method, comprising:

decoding a bitstream to obtain a feature map of a target object in a current picture; and
inputting the feature map of the target object in the current picture to a visual task network and obtaining a prediction result output by the visual task network.

15. The method of claim 14, wherein

decoding the bitstream to obtain the feature map of the target object in the current picture comprises:
decoding the bitstream to obtain a quantized feature map of the target object in the current picture; and
inputting the feature map of the target object in the current picture to the visual task network comprises:
inputting the quantized feature map of the target object in the current picture to the visual task network.

16. The method of claim 14 or 15, wherein the visual task network is a classification network, an object detection network, or an object segmentation network.

17. The method of claim 14, further comprising:

decoding the bitstream to obtain a feature map of a background in the current picture; and
obtaining a reconstructed picture of the current picture according to the feature map of the target object in the current picture and the feature map of the background in the current picture.

18. The method of claim 17, wherein obtaining the reconstructed picture of the current picture according to the feature map of the target object in the current picture and the feature map of the background in the current picture comprises:

obtaining a feature map of the current picture by adding the feature map of the target object and the feature map of the background; and
obtaining the reconstructed picture of the current picture by decoding the feature map of the current picture with a decoder.

19. The method of claim 17, wherein

decoding the bitstream to obtain the feature map of the background in the current picture comprises:
decoding the bitstream to obtain a quantized feature map of the background; and
obtaining the reconstructed picture of the current picture according to the feature map of the target object in the current picture and the feature map of the background in the current picture comprises:
obtaining the reconstructed picture of the current picture according to the quantized feature map of the target object in the current picture and the quantized feature map of the background in the current picture.

20. The method of claim 17, wherein the bitstream comprises a sub-bitstream of the target object and a sub-bitstream of the background, the sub-bitstream of the target object is generated by encoding of the feature map of the target object in the current picture, and the sub-bitstream of the background is generated by encoding of the feature map of the background in the current picture.

21. The method of claim 20, wherein an encoding bitrate corresponding to the sub-bitstream of the target object is higher than an encoding bitrate corresponding to the sub-bitstream of the background.

22. A model training method, comprising:

obtaining a first training picture;
obtaining a binary mask of a target object in the first training picture and a binary mask of a background in the first training picture by processing the first training picture;
obtaining a first feature map of the first training picture by encoding the first training picture with a first encoder, and obtaining a second feature map of the first training picture by encoding the first training picture with a second encoder;
obtaining a feature map of the target object in the first training picture according to the binary mask of the target object in the first training picture and the first feature map of the first training picture, and obtaining a feature map of the background in the first training picture according to the binary mask of the background in the first training picture and the second feature map of the first training picture;
encoding the feature map of the target object in the first training picture and the feature map of the background in the first training picture to obtain a bitstream;
decoding the bitstream to obtain the feature map of the target object in the first training picture and the feature map of the background in the first training picture;
obtaining a third feature map of the first training picture according to the feature map of the target object in the first training picture and the feature map of the background in the first training picture;
decoding the third feature map of the first training picture with a decoder to obtain a reconstructed picture of the first training picture; and
training the first encoder, the second encoder, and the decoder according to the first training picture and the reconstructed picture of the first training picture.

23. The method of claim 22, wherein obtaining the binary mask of the target object in the first training picture and the binary mask of the background in the first training picture by processing the first training picture comprises:
obtaining the binary mask of the target object in the first training picture and the binary mask of the background in the first training picture by performing semantic segmentation on the first training picture.

24. The method of claim 22, where obtaining the feature map of the target object in the first training picture according to the binary mask of the target object in the first training picture and the first feature map of the first training picture, and obtaining the feature map of the background in the first training picture according to the binary mask of the background in the first training picture and the second feature map of the first training picture comprises:

obtaining the feature map of the target object in the first training picture by multiplying the binary mask of the target object in the first training picture by the first feature map of the first training picture; and
obtaining the feature map of the background in the first training picture by multiplying the binary mask of the background in the first training picture by the second feature map of the first training picture.

25. The method of claim 22, wherein obtaining the third feature map of the first training picture according to the feature map of the target object in the first training picture and the feature map of the background in the first training picture comprises:
obtaining the third feature map of the first training picture by adding the feature map of the target object in the first training picture and the feature map of the background in the first training picture.

26. The method according to any of claims 22-25, wherein training the first encoder, the second encoder, and the decoder according to the first training picture and the reconstructed picture of the first training picture comprises:

> constructing a first loss function; and
> training the first encoder, the second encoder, and the decoder according to the first training picture, the reconstructed picture of the first training picture, and the first loss function.

27. The method of claim 26, where constructing the first loss function comprises:
constructing the first loss function according to a loss between the first training picture and the reconstructed picture, and an encoding bitrate provided by the first encoder and an encoding bitrate provided by the second encoder.

28. The method of claim 27, wherein constructing the first loss function according to the loss between the first training picture and the reconstructed picture, and the encoding bitrate provided by the first encoder and the encoding bitrate provided by the second encoder comprises:

> constructing the first loss function according to a formula:

$$L = \lambda \times D + a_1 R_{bkg} + a_2 R_{obj},$$

> wherein D represents the loss between the reconstructed picture and the first training picture, $R_{obj}$ represents the encoding bitrate provided by the first encoder, $R_{bkg}$ represents the encoding bitrate provided by the second encoder, $\lambda$, $a_1$, and $a_2$ are variables, and $a_1 > a_2$.

29. The method of claim 22, wherein encoding the feature map of the target object in the first training picture and the feature map of the background in the first training picture to obtain the bitstream comprises:

> quantizing the feature map of the target object in the first training picture and the feature map of the background in the first training picture; and
> encoding the feature map quantized of the target object in the first training picture and the feature map quantized of the background in the first training picture to obtain the bitstream.

30. The method of claim 22, wherein the second encoder provides an encoding bitrate lower than the first encoder.

31. The method of claim 22, wherein the bitstream comprises a sub-bitstream of the target object and a sub-bitstream of the background, the sub-bitstream of the target object is generated by encoding of the feature map of the target object in the current picture, and the sub-bitstream of the background is generated by encoding of the feature map of the background in the current picture.

32. The method of claim 31, wherein an encoding bitrate corresponding to the sub-bitstream of the target object is higher than an encoding bitrate corresponding to the sub-bitstream of the background.

33. The method of claim 22, further comprising:

> obtaining a second training picture;
> obtaining a binary mask of a target object in the second training picture by processing the second training picture;
> obtaining a first feature map of the second training picture by encoding the second training picture with the first encoder trained;
> obtaining a feature map of the target object in the second training picture according to the binary mask of the target object in the second training picture and the first feature map of the second training picture;
> encoding the feature map of the target object in the second training picture into the bitstream;
> decoding the bitstream to obtain the feature map of the target object in the second training picture;
> inputting the feature map of the target object in the second training picture into the visual task network to obtain a prediction result of the visual task network; and
> training the visual task network according to the prediction result of the visual task network and a labeling result of the second training picture.

34. The method of claim 33, wherein obtaining the binary mask of the target object in the second training picture by processing the second training picture comprises:
obtaining the binary mask of the target object in the second training picture by performing semantic segmentation on the second training picture.

35. The method of claim 33, wherein obtaining the feature map of the target object in the second training picture according to the binary mask of the target object in the second training picture and the first feature map of the second training picture comprises:
obtaining the feature map of the target object in the second training picture by multiplying the binary mask of the target object in the second training picture by the first feature map of the second training picture.

36. The method of claim 33, wherein encoding the feature map of the target object in the second training picture into the bitstream comprises:

quantizing the feature map of the target object in the second training picture; and
encoding the feature map quantized of the target object in the second training picture into the bitstream.

37. The method of claim 33, wherein training the visual task network according to the prediction result of the visual task network and the labeling result of the second training picture comprises:

constructing a second loss function corresponding to the visual task network according to a type of the visual task network; and
training the visual task network according to the second loss function, the prediction result of the visual task network, and the labeling result of the second training picture.

38. A video encoder, comprising:

an obtaining unit configured to obtain a current picture; and
a first encoding unit configured to obtain a binary mask of a target object in the current picture by processing the current picture, obtain a first feature map of the current picture by encoding the current picture with a first encoder, obtain a feature map of the target object in the current picture according to the binary mask of the target object in the current picture and the first feature map of the current picture, and encode the feature map of the target object in the current picture to obtain a bitstream.

39. A video decoder, comprising:

a decoding unit configured to decode a bitstream to obtain a feature map of a target object in a current picture; and
a prediction unit configured to input the feature map of the target object in the current picture to a visual task network and obtain a prediction result output by the visual task network.

40. A model training apparatus, comprising:

an obtaining unit configured to obtain a first training picture;
a processing unit configured to obtain a binary mask of a target object in the first training picture and a binary mask of a background in the first training picture by processing the first training picture;
a first encoding unit configured to obtain a first feature map of the first training picture by encoding the first training picture with a first encoder, and obtaining a second feature map of the first training picture by encoding the first training picture with a second encoder;
a determining unit configured to obtain a feature map of the target object in the first training picture according to the binary mask of the target object in the first training picture and the first feature map of the first training picture, and obtaining a feature map of the background in the first training picture according to the binary mask of the background in the first training picture and the second feature map of the first training picture;
a second encoding unit configured to encode the feature map of the target object in the first training picture and the feature map of the background in the first training picture to obtain a bitstream;
a first decoding unit configured to decode the bitstream to obtain the feature map of the target object in the first training picture and the feature map of the background in the first training picture, and obtain a third feature map of the first training picture according to the feature map of the target object in the first training picture and the feature map of the background in the first training picture;
a second decoding unit configured to decode the third feature map of the first training picture with a decoder to obtain a reconstructed picture of the first training picture; and
a training unit configured to train the first encoder, the second encoder, and the decoder according to the first training picture and the reconstructed picture of the first training picture.

**41.** A video coding system comprising:

the video encoder of claim 38; and
the video decoder of claim 39.

**42.** A computer-readable storage medium storing computer-executable instructions which, when executed by a processor, implement the method of any of claims 1-38.

100

ENCODING DEVICE 110

| VIDEO SOURCE 111 | VIDEO ENCODER 112 | OUTPUT INTERFACE 113 |

~130

DECODING DEVICE 120

| DISPLAY DEVICE 123 | VIDEO DECODER 122 | INPUT INTERFACE 121 |

FIG. 1

VIDEO ENCODER 200

240  260  280

FIRST ENCODER 210

⊗  Q  AE

PICTURE → TARGET SEGMENTATION UNIT 220

FEATURE MAP OF TARGET OBJECT

FEATURE MAP OF BACKGROUND

BITSTREAM →

SECOND ENCODER 230

⊗  Q  AE

250

270  290

FIG. 2

FIG. 3

FIG. 4

FEATURE MAP

CONV 5×5×192

RESIDUAL BLOCK

RESIDUAL BLOCK

RESIDUAL BLOCK

CONV 5×5×192

RESIDUAL BLOCK

RESIDUAL BLOCK

RESIDUAL BLOCK

CONV 5×5×192

FEATURE MAP

FIG. 5A

FEATURE MAP

```
┌─────────────────────────────────────┐
│  ┌───────────────────────────────┐   │
│  │        CONV 5×5×192            │   │
│  └───────────────────────────────┘   │
│                                       │
│  ┌───────────────────────────────┐   │
│  │       RESIDUAL BLOCK          │   │
│  ├───────────────────────────────┤   │
│  │       RESIDUAL BLOCK          │   │
│  ├───────────────────────────────┤   │
│  │       RESIDUAL BLOCK          │   │
│  └───────────────────────────────┘   │
│                                       │
│  ┌───────────────────────────────┐   │
│  │        CONV 5×5×192            │   │
│  └───────────────────────────────┘   │
│                                       │
│  ┌───────────────────────────────┐   │
│  │            NLAM               │   │
│  └───────────────────────────────┘   │
│                                       │
│  ┌───────────────────────────────┐   │
│  │        CONV 5×5×192            │   │
│  └───────────────────────────────┘   │
│                                       │
│  ┌───────────────────────────────┐   │
│  │       RESIDUAL BLOCK          │   │
│  ├───────────────────────────────┤   │
│  │       RESIDUAL BLOCK          │   │
│  ├───────────────────────────────┤   │
│  │       RESIDUAL BLOCK          │   │
│  └───────────────────────────────┘   │
│                                       │
│  ┌───────────────────────────────┐   │
│  │        CONV 5×5×192            │   │
│  └───────────────────────────────┘   │
│                                       │
│  ┌───────────────────────────────┐   │
│  │            NLAM               │   │
│  └───────────────────────────────┘   │
└─────────────────────────────────────┘
```

FEATURE MAP

FIG. 5B

FEATURE MAP

CONV 5×5×192

RESIDUAL BLOCK

RESIDUAL BLOCK

RESIDUAL BLOCK

CONV 5×5×192

RESIDUAL BLOCK

RESIDUAL BLOCK

RESIDUAL BLOCK

CONV 5×5×192

RECONSTRUCTED
PICTURE

FIG. 6A

FEATURE MAP

NLAM

CONV 5×5×192

RESIDUAL BLOCK

RESIDUAL BLOCK

RESIDUAL BLOCK

CONV 5×5×192

NLAM

CONV 5×5×192

RESIDUAL BLOCK

RESIDUAL BLOCK

RESIDUAL BLOCK

CONV 5×5×192

RECONSTRUCTED PICTURE

FIG. 6B

700

| OBTAIN A FIRST TRAINING PICTURE | S701 |

| PROCESS THE FIRST TRAINING PICTURE TO OBTAIN A BINARY MASK OF A TARGET OBJECT IN THE FIRST TRAINING PICTURE AND A BINARY MASK OF A BACKGROUND IN THE FIRST TRAINING PICTURE | S702 |

| ENCODE THE FIRST TRAINING PICTURE WITH A FIRST ENCODER TO OBTAIN A FIRST FEATURE MAP OF THE FIRST TRAINING PICTURE, AND ENCODER THE FIRST TRAINING PICTURE WITH A SECOND ENCODER TO OBTAIN A SECOND FEATURE MAP OF THE FIRST TRAINING PICTURE | S703 |

| OBTAIN A FEATURE MAP OF THE TARGET OBJECT IN THE FIRST TRAINING PICTURE ACCORDING TO THE BINARY MASK OF THE TARGET OBJECT IN THE FIRST TRAINING PICTURE AND THE FIRST FEATURE MAP OF THE FIRST TRAINING PICTURE, AND OBTAIN A FEATURE MAP OF THE BACKGROUND IN THE FIRST TRAINING PICTURE ACCORDING TO THE BINARY MASK OF THE BACKGROUND IN THE FIRST TRAINING PICTURE AND THE SECOND FEATURE MAP OF THE FIRST TRAINING PICTURE | S704 |

| ENCODER THE FEATURE MAP OF THE TARGET OBJECT IN THE FIRST TRAINING PICTURE AND THE FEATURE MAP OF THE BACKGROUND IN THE FIRST TRAINING PICTURE TO OBTAIN A BITSTREAM | S705 |

| DECODE THE BITSTREAM TO OBTAIN THE FEATURE MAP OF THE TARGET OBJECT IN THE FIRST TRAINING PICTURE AND THE FEATURE MAP OF THE BACKGROUND IN THE FIRST TRAINING PICTURE | S706 |

| OBTAIN A THIRD FEATURE MAP OF THE FIRST TRAINING PICTURE ACCORDING TO THE FEATURE MAP OF THE TARGET OBJECT IN THE FIRST TRAINING PICTURE AND THE FEATURE MAP OF THE BACKGROUND IN THE FIRST TRAINING PICTURE | S707 |

| DECODE THE THIRD FEATURE MAP OF THE FIRST TRAINING PICTURE USING A DECODER TO OBTAIN A RECONSTRUCTED PICTURE OF THE FIRST TRAINING PICTURE | S708 |

| TRAIN THE FIRST ENCODER, THE SECOND ENCODER, AND THE DECODER ACCORDING TO THE FIRST TRAINING PICTURE AND THE RECONSTRUCTED PICTURE OF THE FIRST TRAINING PICTURE | S709 |

FIG. 7

FIG. 8

EP 4 283 993 A1

900

| OBTAIN A SECOND TRAINING PICTURE | S901 |

| PROCESS THE SECOND TRAINING PICTURE TO OBTAIN A BINARY MASK OF A TARGET OBJECT IN THE SECOND TRAINING PICTURE | S902 |

| ENCODE THE SECOND TRAINING PICTURE WITH A TRAINED FIRST ENCODER TO OBTAIN A FIRST FEATURE MAP OF THE SECOND TRAINING PICTURE | S903 |

| OBTAIN A FEATURE MAP OF THE TARGET OBJECT IN THE SECOND TRAINING PICTURE ACCORDING TO THE BINARY MASK OF THE TARGET OBJECT IN THE SECOND TRAINING PICTURE AND THE FIRST FEATURE MAP OF THE SECOND TRAINING PICTURE | S904 |

| ENCODE THE FEATURE MAP OF THE TARGET OBJECT IN THE SECOND TRAINING PICTURE INTO A BITSTREAM | S905 |

| DECODE THE BITSTREAM TO OBTAIN THE FEATURE MAP OF THE TARGET OBJECT IN THE SECOND TRAINING PICTURE | S906 |

| INPUT THE FEATURE MAP OF THE TARGET OBJECT IN THE SECOND TRAINING PICTURE INTO THE VISUAL TASK NETWORK TO OBTAIN A PREDICTION RESULT OF THE VISUAL TASK NETWORK | S907 |

| TRAIN THE VISUAL TASK NETWORK ACCORDING TO THE PREDICTION RESULT OF THE VISUAL TASK NETWORK AND A LABELING RESULT OF THE SECOND TRAINING PICTURE | S908 |

FIG. 9

1000

| OBTAIN A CURRENT PICTURE | S101 |

PROCESS THE CURRENT PICTURE TO OBTAIN A BINARY MASK OF A
TARGET OBJECT IN THE CURRENT PICTURE — S102

ENCODE THE CURRENT PICTURE WITH A FIRST ENCODER, SO AS TO
OBTAIN A FIRST FEATURE MAP OF THE CURRENT PICTURE — S103

OBTAIN A FEATURE MAP OF THE TARGET OBJECT IN THE CURRENT
PICTURE ACCORDING TO THE BINARY MASK OF THE TARGET OBJECT
IN THE CURRENT PICTURE AND THE FIRST FEATURE MAP OF THE
CURRENT PICTURE — S104

ENCODE A FEATURE MAP OF THE TARGET OBJECT IN THE CURRENT
PICTURE TO OBTAIN A BITSTREAM — S105

FIG. 10

2000

```
┌─────────────────────────────────────────────────────────────┐
│              OBTAIN A CURRENT PICTURE                         │ ∿ S201
└─────────────────────────────────────────────────────────────┘
                             ↓
┌─────────────────────────────────────────────────────────────┐
│  PROCESS THE CURRENT PICTURE TO OBTAIN A BINARY MASK OF A     │ ∿ S202
│         TARGET OBJECT IN THE CURRENT PICTURE                  │
└─────────────────────────────────────────────────────────────┘
                             ↓
┌─────────────────────────────────────────────────────────────┐
│  ENCODE THE CURRENT PICTURE BY USING A FIRST ENCODER TO       │ ∿ S203
│   OBTAIN A FIRST FEATURE MAP OF THE CURRENT PICTURE           │
└─────────────────────────────────────────────────────────────┘
                             ↓
┌─────────────────────────────────────────────────────────────┐
│  ACCORDING TO THE BINARY MASK OF THE TARGET OBJECT IN THE     │
│  CURRENT PICTURE AND THE FIRST FEATURE MAP OF THE CURRENT     │ ∿ S204
│  PICTURE, OBTAIN A FEATURE MAP OF THE TARGET OBJECT IN THE    │
│                    CURRENT PICTURE                            │
└─────────────────────────────────────────────────────────────┘
                             ↓
┌─────────────────────────────────────────────────────────────┐
│  PROCESS THE CURRENT PICTURE TO OBTAIN A BINARY MASK OF A     │ ∿ S205
│         BACKGROUND IN THE CURRENT PICTURE                     │
└─────────────────────────────────────────────────────────────┘
                             ↓
┌─────────────────────────────────────────────────────────────┐
│  ENCODE THE CURRENT PICTURE BY USING A SECOND ENCODER TO      │ ∿ S206
│   OBTAIN A SECOND FEATURE MAP OF THE CURRENT PICTURE          │
└─────────────────────────────────────────────────────────────┘
                             ↓
┌─────────────────────────────────────────────────────────────┐
│  OBTAIN A FEATURE MAP OF THE BACKGROUND IN THE CURRENT        │
│  PICTURE ACCORDING TO THE BINARY MASK OF THE BACKGROUND IN    │ ∿ S207
│  THE CURRENT PICTURE AND THE SECOND FEATURE MAP OF THE        │
│                    CURRENT PICTURE                            │
└─────────────────────────────────────────────────────────────┘
                             ↓
┌─────────────────────────────────────────────────────────────┐
│  ENCODE THE FEATURE MAP OF THE TARGET OBJECT IN THE CURRENT   │
│  PICTURE AND THE FEATURE MAP OF THE BACKGROUND IN THE         │ ∿ S208
│     CURRENT PICTURE TO OBTAIN A BITSTREAM                     │
└─────────────────────────────────────────────────────────────┘
```

FIG. 11

3000

```
┌─────────────────────────────────────────────────────────┐
│ DECODE A BITSTREAM TO OBTAIN A FEATURE MAP OF A TARGET    │      S301
│         OBJECT IN A CURRENT PICTURE                       │
└─────────────────────────────────────────────────────────┘
                            │
                            ▼
┌─────────────────────────────────────────────────────────┐
│ INPUT THE FEATURE MAP OF THE TARGET OBJECT IN THE CURRENT │      S302
│ PICTURE INTO THE VISUAL TASK NETWORK TO OBTAIN A          │
│ PREDICTION RESULT OUTPUT BY THE VISUAL TASK NETWORK       │
└─────────────────────────────────────────────────────────┘
```

FIG. 12

4000

```
┌─────────────────────────────────────────────────────────┐
│ DECODE A BITSTREAM TO OBTAIN A FEATURE MAP OF A TARGET    │      S401
│         OBJECT IN A CURRENT PICTURE                       │
└─────────────────────────────────────────────────────────┘
                            │
                            ▼
┌─────────────────────────────────────────────────────────┐
│ INPUT THE FEATURE MAP OF THE TARGET OBJECT INTO A VISUAL  │      S402
│ TASK NETWORK TO OBTAIN A PREDICTION RESULT OUTPUT BY      │
│ THE VISUAL TASK NETWORK                                   │
└─────────────────────────────────────────────────────────┘
                            │
                            ▼
┌─────────────────────────────────────────────────────────┐
│ DECODE THE BITSTREAM TO OBTAIN A FEATURE MAP OF A         │      S403
│ BACKGROUND IN THE CURRENT PICTURE                         │
└─────────────────────────────────────────────────────────┘
                            │
                            ▼
┌─────────────────────────────────────────────────────────┐
│ OBTAIN A RECONSTRUCTED PICTURE OF THE CURRENT PICTURE     │      S404
│ ACCORDING TO THE FEATURE MAP OF THE TARGET OBJECT IN THE  │
│ CURRENT PICTURE AND THE FEATURE MAP OF THE BACKGROUND     │
│ IN THE CURRENT PICTURE                                    │
└─────────────────────────────────────────────────────────┘
```

FIG. 13

VIDEO ENCODER 10

OBTAINING UNIT 11

FIRST ENCODING UNIT 12

SECOND ENCODING UNIT 13

FIG. 14

VIDEO DECODER 20

DECODING UNIT 21

PREDICTION UNIT 22

FIG. 15

MODEL TRAINING APPARATUS 50

OBTAINING UNIT 51

PROCESSING UNIT 52

FIRST ENCODING UNIT 53

DETERMINING UNIT 54

SECOND ENCODING UNIT 55

FIRST DECODING UNIT 56

SECOND DECODING UNIT 57

TRAINING UNIT 58

FIG. 16

30

ELECTRONIC DEVICE  33

TRANCEIVER

31  32

MEMORY
COMPUTER
PROGRAM

PROCESSOR

34

FIG. 17

VIDEO CODING SYSTEM 40

VIDEO
ENCODER 41

VIDEO
DECODER 42

FIG. 18

## INTERNATIONAL SEARCH REPORT

| International application No. |
|---|
| **PCT/CN2021/073669** |

### A. CLASSIFICATION OF SUBJECT MATTER

H04N 19/42(2014.01)i

According to International Patent Classification (IPC) or to both national classification and IPC

### B. FIELDS SEARCHED

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNABS, CNTXT, CNKI, VEN, USTXT, WOTXT, EPTXT: 编码, 解码, 图像, 目标, 特征图, 码率, encode, decode, image, feature map, code rate

### C. DOCUMENTS CONSIDERED TO BE RELEVANT

| Category* | Citation of document, with indication, where appropriate, of the relevant passages | Relevant to claim No. |
|---|---|---|
| X | CN 111147862 A (NANJING UNIVERSITY) 12 May 2020 (2020-05-12) description paragraphs 0020-0038 | 1-42 |
| A | CN 109035267 A (EAST CHINA NORMAL UNIVERSITY) 18 December 2018 (2018-12-18) entire document | 1-42 |
| A | CN 111489372 A (TIANJIN UNIVERSITY) 04 August 2020 (2020-08-04) entire document | 1-42 |
| A | US 2020143171 A1 (ADOBE INC.) 07 May 2020 (2020-05-07) entire document | 1-42 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 October 2021** | **14 October 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/073669**

| Patent document cited in search report | | | Publication date (day/month/year) | Patent family member(s) | | | Publication date (day/month/year) |
|---|---|---|---|---|---|---|---|
| CN | 111147862 | A | 12 May 2020 | CN | 111147862 | B | 23 February 2021 |
| CN | 109035267 | A | 18 December 2018 | | None | | |
| CN | 111489372 | A | 04 August 2020 | | None | | |
| US | 2020143171 | A1 | 07 May 2020 | US | 10810435 | B2 | 20 October 2020 |

Form PCT/ISA/210 (patent family annex) (January 2015)